# EUROPEAN PATENT APPLICATION

(11) **EP 4 787 526 A1**
(43) Date of publication of application: **05.08.2026**
(21) Application number: 26155718.5
(22) Date of filing: 02.02.2026
(51) Int. Cl.: H01M 10/0562, H01M 4/36, H01M 4/38, H01M 4/583

(54) **COMPOSITE SOLID ELECTROLYTE, METHOD OF PREPARING THE SAME, AND SOLID SECONDARY BATTERY INCLUDING THE SAME**

(30) Priority: 04.02.2025 KR 20250013903
(71) Applicant: SAMSUNG SDI CO., LTD., Yongin-si, Gyeonggi-do 17084 (KR)
(72) Inventor: KIM, Mokwon, 16678 Suwon-si (KR); YOON, Kyungho, 16678 Suwon-si (KR); KANG, Dongil, 16678 Suwon-si (KR); KU, Junhwan, 16678 Suwon-si (KR); PARK, Bumwoo, 16678 Suwon-si (KR); HWANG, Seungsik, 16677 Suwon-si (KR)
(74) Representative: Elkington and Fife LLP

(57) **Abstract**

A composite solid electrolyte, a method of preparing the composite solid electrolyte, and a solid secondary battery including the composite solid electrolyte. The composite solid electrolyte includes a sulfide-containing solid electrolyte, a binder, and a filler composite, where the filler composite includes an organic fibrous filler and a metal oxide located on a surface of the organic fibrous filler.

## Description

### FIELD OF THE INVENTION

The present disclosure relates to a composite solid electrolyte, a method of preparing the composite solid electrolyte, and a solid secondary battery including the composite solid electrolyte.

### BACKGROUND OF THE INVENTION

A solid electrolyte layer may be obtained by applying a composition containing a solid electrolyte, a solvent, and a binder onto a substrate and then performing a drying process.

When a process for large-area and mass production such as roll pressing is used in the manufacture of a solid electrolyte layer, the solid electrolyte layer is subjected to a pressurization process after the coating and drying processes to reduce porosity and increase film density. However, the brittleness of the solid electrolyte increases rapidly, thereby making it easy for microcracks or fractures to occur. Since this process directly affects a battery cell assembly process that follows a subsequent continuous process, it is necessary to improve the properties of the solid electrolyte layer after the pressurizing process.

### SUMMARY OF THE INVENTION

Provided are a composite solid electrolyte with improved toughness and a method for preparing the composite solid electrolyte, as well as a layer including the composite solid electrolyte.

Provided is a solid secondary battery with improved cycle characteristics by including the above-described composite solid electrolyte layer.

Additional aspects will be set forth in part in the description which follows and, in part, will be apparent from the description, or may be learned by practice of the presented embodiments of the disclosure.

According to an aspect of the disclosure, a composite solid electrolyte includes
a sulfide-containing solid electrolyte, a binder, and a filler composite,
wherein the filler composite includes an organic fibrous filler, and
a metal oxide located on a surface of the organic fibrous filler.

Proposed embodiments concern a composite solid electrolyte for all-solid-state lithium secondary batteries, directed to improving the mechanical robustness of sulfide-based solid electrolyte layers during manufacture and operation. A principal proposed concept lies in incorporating a low loading of a filler composite comprising an organic fibrous filler (e.g. high-aspect-ratio polymer fibres such as cellulose nanofibres) whose surface is partially coated with nano-scale metal oxide particles, thereby materially increasing toughness without compromising ionic performance or processability.

It is proposed to reinforce sulfide solid electrolytes with fibrous fillers to improve mechanical properties.

From a structural perspective, embodiments may depart from conventional particulate or fibrous fillers by providing a hybrid filler architecture in which metal oxide nanoparticles are distributed on the surface of a linear organic fibre. This configuration suppresses self-aggregation of the high-aspect-ratio fibres while maintaining partial exposure of the organic surface, enabling effective interaction with both the sulfide solid electrolyte particles and the polymeric binder. A further technical refinement is the disclosed pre-mixing (dry or wet) step between a first portion of sulfide electrolyte and the filler composite, forming a clustered intermediate that enhances dispersion and interfacial coupling when subsequently combined with the remaining electrolyte, binder and solvent.

A principal technical effect achieved is a marked improvement in toughness, bending strength and strain tolerance of thin sulfide electrolyte membranes, particularly after high-pressure densification processes such as roll pressing or warm isotactic pressing. Implementation examples demonstrate that, even at filler loadings as low as ~0.5-2 wt%, the composite solid electrolytes exhibit significantly reduced micro-cracking and fracture compared with unfilled controls, while maintaining comparable ionic conductivity, rate capability and initial efficiency at cell level. This directly addresses a recognised bottleneck in scaling sulfide-based solid electrolytes to thin, high-energy-density architectures.

From a manufacturing and integration standpoint, embodiments may enable more reliable formation of self-supporting or laminated solid electrolyte layers with thicknesses down to ~30-50 µm after pressing, under relaxed or industrially realistic pressure conditions. The improved mechanical integrity of cathode-electrolyte and anode-electrolyte subassemblies reduces defect rates during continuous processing and translates into substantially enhanced cycle life under elevated current densities, attributed to suppression of micro-shorts arising from electrolyte cracking. Overall, there may be proposed a credible and well-supported materials-level solution to a practical manufacturing problem in all-solid-state battery technology, with applicability across mono-layer and bi-layer solid electrolyte configurations.

The organic fibrous filler comprises a polymer fiber having a linear structure.

The organic fibrous filler may have an average diameter D of about 0.001 micrometers (µm) to about 10 µm, an average length L2 of about 0.1 µm to about 500 µm, and an aspect ratio (D/L2) of about 15 to about 100,000.

The organic fibrous filler may have an average diameter (D) of about 0.005 µm to about 1 µm, an average length (L2) of about 0.1 µm to about 200 µm, and an aspect ratio (D/L2) of about 50 to about 5,000.

In the composite, at least a portion of the surface of the organic fibrous filler may be exposed between the metal oxides.

The metal oxide may be a nano-sized inorganic material having an average particle diameter of about 5 nanometers (nm) to about 100 nm.

The binder may include, for example, polyacrylate, polyvinyl alcohol, carboxymethyl cellulose, hydroxypropyl cellulose, diacetyl cellulose, polyvinyl chloride, carboxylated polyvinyl chloride, polyvinyl fluoride, ethylene oxide, polyvinyl pyrrolidone, polyurethane, polytetrafluoroethylene (PTFE), polyvinylidene fluoride, polyethylene, polypropylene, styrene-butadiene rubber, (meth)acrylated styrene-butadiene rubber, hydrogenated nitrile-butadiene rubber (HNBR), epoxy resin, (meth)acrylic resin, polyester, nylon, lithium polyacrylate, a copolymer including unit structures derived from a polar monomer, which is at least one of nitrile-containing monomers and (meth)acrylate-containing monomers, and a unit structure derived from a nonpolar monomer, an ethylene vinyl acetate copolymer, or a combination thereof.

According to another aspect of the disclosure, a solid secondary battery includes a cathode, an anode, and a solid electrolyte layer between the cathode and the anode,
wherein the solid electrolyte layer includes a composite solid electrolyte,
the composite solid electrolyte includes a sulfide-containing solid electrolyte, a binder, and a composite, and
the composite includes an organic fibrous filler and a metal oxide located on a surface of the organic fibrous filler.

The solid electrolyte layer may include a first solid electrolyte layer and a second solid electrolyte layer,
wherein the first solid electrolyte layer may be in contact with the cathode, the second solid electrolyte layer may be in contact with the anode, at least one of the first solid electrolyte layer or the second solid electrolyte layer may include the composite solid electrolyte,
the composite solid electrolyte may include the sulfide-containing solid electrolyte, the binder, and the composite, and the composite may include the organic fibrous filler and the metal oxide located on a surface of the organic fibrous filler.

The anode may include an anode current collector, a first anode active material layer may be located between the anode current collector and the solid electrolyte layer, the first anode active material layer may include an anode active material and a binder The anode active material may include at least one of a carbon-containing anode active material or a metal or metalloid anode active material,

The carbon-containing anode active material may include amorphous carbon, crystalline carbon, porous carbon, or a combination thereof.

The solid secondary battery may further include a second anode active material layer located between the anode current collector and the first anode material layer after the solid secondary battery is charged.

The second anode active material layer may be a metal layer, and the metal layer may include lithium or a lithium alloy.

According to another aspect of the disclosure, a solid secondary battery may include a cathode, an anode current collector, and a solid electrolyte layer between the cathode and the anode current collector,
wherein the solid electrolyte layer may include a first solid electrolyte layer and a second solid electrolyte layer,
the first solid electrolyte layer may be in contact with the cathode,
the second solid electrolyte layer may be in contact with an anode,
at least one of the first solid electrolyte layer or the second solid electrolyte layer may include a composite solid electrolyte,
the composite solid electrolyte may include a sulfide-containing solid electrolyte, a binder, and a composite, and the composite may include an organic fibrous filler and a metal oxide located on a surface of the organic fibrous filler.

The second solid electrolyte layer may include a solid electrolyte, the composite solid electrolyte may include a sulfide-containing solid electrolyte, a binder, and a composite, and the composite may include an organic fibrous filler and metal oxide located on the surface of the organic fibrous filler.

According to another aspect of the disclosure, a method of preparing the composite solid electrolyte layer includes preparing a composition for forming a composite solid electrolyte, the composition including a sulfide-containing solid electrolyte, a binder, and a filler composite, and a solvent, and
forming the composition to provide a solvent-containing composite solid electrolyte layer, and removing the solvent to provide the composite solid electrolyte layer,
wherein the composite solid electrolyte layer includes the sulfide-containing solid electrolyte, the binder, and the filler composite, and
the filler composite includes an organic fibrous filler and a metal oxide located on a surface of the organic fibrous filler.

The sulfide-containing solid electrolyte may include a first sulfide-containing solid electrolyte and a second sulfide-containing solid electrolyte, and the preparing of the composition for forming a composite solid electrolyte layer may include: pre-mixing the first sulfide-containing solid electrolyte and the filler composite to prepare a first sulfide-containing solid electrolyte-composite composition; and adding the second sulfide-containing solid electrolyte, the binder, and the solvent to the first sulfide-containing solid electrolyte-composite composition and mixing them, wherein the first sulfide-containing solid electrolyte and the second sulfide-containing solid electrolyte are the same as or different from each other.

In the preparing of the first sulfide-containing solid electrolyte-composite composition, a content of the first sulfide-containing solid electrolyte may be about 65 parts by weight to about 90 parts by weight based on 100 parts by weight of a total weight of the first sulfide-containing solid electrolyte and the composite.

The content of the first sulfide-containing solid electrolyte may be about 5 parts by weight to about 20 parts by weight based on 100 parts by weight of the second sulfide-containing solid electrolyte.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 schematically illustrates a structure of a composite solid electrolyte according to an embodiment;
FIG. 2 is a view for explaining a method of preparing a composition for forming a composite solid electrolyte according to an embodiment;
FIG. 3A is a scanning electron microscope (SEM) image of a complex of Preparation Example 1;
FIG. 3B is an SEM image of a solid electrolyte-composite structure (cluster) obtained by dry premixing in Example 5;
FIG. 4A illustrates stress changes (megapascals, MPa) according to strain (percent, %) in a composite solid electrolyte of Example 1 and a solid electrolyte of Comparative Example 1;
FIG. 4B illustrates stress changes (megapascals, MPa) according to strain (percent, %) in composite solid electrolytes of Example 2 and Example 3 and a solid electrolyte of Comparative Example 2;
FIG. 5A illustrates voltage changes (volts, v) according to capacity per weight (milliampere-hours per gram, mAh/g) in a solid secondary battery of Manufacture Example 1 and a solid secondary battery of Comparative Manufacture Example 1;
FIG. 5B illustrates voltage changes (volts, v) according to capacity per weight (milliampere-hours per gram, mAh/g) in a solid secondary battery of Manufacture Example 2 and a solid secondary battery of Comparative Manufacture Example 2;
FIGS. 6A to 6C are views illustrating a process of manufacturing a solid secondary battery including a first solid electrolyte membrane and a second solid electrolyte membrane, according to an embodiment;
FIG. 7 is a schematic view illustrating the structure of a solid secondary battery employing a composite solid electrolyte, according to an embodiment;
FIG. 8 is a schematic view illustrating the structure of a solid secondary battery employing a composite solid electrolyte, according to another embodiment;
FIG. 9 illustrates capacity changes (milliampere-hours per gram, mAh/g) and Coulombic efficiency changes according to the number of cycles (times) in the solid secondary batteries of Manufacture Example 1 and Comparative Manufacture Example 1; and
FIG. 10 illustrates capacity changes (milliampere-hours per gram, mAh/g) and Coulombic efficiency changes according to the number of cycles (times) in the solid secondary batteries of Manufacture Example 2 and Comparative Manufacture Example 2.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Hereinafter, embodiments will be described in detail. However, these embodiments are provided for illustrative purposes only and are not intended to limit the disclosure, and the disclosure is defined only by the scope of the following claims.

Unless otherwise specified herein, when a portion of a layer, a film, a region, a plate, or the like is referred to as being "on" another portion, it includes not only a case in which the portion is directly on the other portion, but also a case in which an intervening portion is present therebetween.

Unless otherwise specified herein, an expression in the singular may also include an expression in the plural. Unless otherwise specified, "A or B" may mean "including A, including B, or including A and B."

The term "combination thereof" as used herein may refer to a mixture, laminate, composite, copolymer, alloy, blend, reaction product and the like of constituents.

It will be understood that, although the terms "first," "second," "third" or the like may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. Therefore, reference to "an" element in a claim followed by reference to "the" element is inclusive of one element as well as a plurality of the elements.

"At least one" is not to be construed as limiting "a" or "an." "Or" means "and/or." As used herein, the term "and/or" includes any and all combinations of one or more of the associated listed items.

It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined herein, the particle diameter may be an average particle diameter. Also, the particle diameter refers to an average particle diameter (D50), which refers to the diameter of particles having a cumulative volume of 50 volume percent (vol%) in particle size distribution. The average particle diameter (D50) may be measured by using a method widely known in the art, and may be measured, for example, by using a particle size analyzer or from a transmission electron microscope image or a scanning electron microscope image. As another method, a dynamic light-scattering measurement device may be used to perform measurement and data analysis, the number of particles may be counted for each particle size range, and then the average particle diameter (D50) may be obtained through calculation therefrom. Alternatively, the average particle diameter (D50) may be measured by using a laser diffraction method. When measurement is performed by a laser diffraction method, for example, particles to be measured may be dispersed in a dispersion medium, and then may be irradiated with ultrasonic waves of about 28 kilohertz (kHz) at an output of 60 watts (W) by using a commercially available laser diffraction particle size measurement device (e.g., Microtrac MT 3000), and then the average particle diameter (D50) on the basis of 50% of the particle diameter distribution in the measurement device may be calculated.

Hereinafter, a composite solid electrolyte according to an embodiment, a method of preparing the composite solid electrolyte, and a solid secondary battery including the composite solid electrolyte will be described in more detail with reference to the accompanying drawings.

A solid electrolyte layer containing a sulfide-containing solid electrolyte may be formed by applying and drying a composition onto a substrate, the composition being obtained by mixing a sulfide-containing solid electrolyte, a non-polar solvent, and a binder. This sulfide-containing solid electrolyte layer is placed between a cathode and anode to prepare a laminate, and the laminate is subjected to a pressurizing process to manufacture a solid secondary battery. In order to increase the cell energy density of a solid secondary battery, the thickness of a solid electrolyte layer should be minimized as much as possible. However, as the film thickness becomes thinner due to the high brittleness of the solid electrolyte layer, cracks easily occur due to external impact. When cracks occur easily in this way, the manufacturing processability of a solid secondary battery and the stability of a cell may deteriorate, so a solid electrolyte layer with improved strength and flexibility is required.

Thus, in order to solve the above-described problems, the present inventors provide a composite solid electrolyte including a sulfide-containing solid electrolyte, a binder, and a composite,
wherein the filler composite includes an organic fibrous filler and a metal oxide located on a surface of the organic fibrous filler.

In the disclosure, the organic fibrous filler is a one-dimensional linear structure containing an organic material.

The organic fibrous filler may include a polymer fiber having a linear structure. The composite has a structure in which a coating film containing metal oxide particles is located on the surface of a linear polymer fiber, to provide a high-dispersity filler in which aggregation between fibrous fillers is suppressed to the greatest extent possible. In the composite, at least a portion of the surface of the organic fibrous filler may be exposed between the metal oxides.

The content of the composite is about 0.1 parts by weight to about 10 parts by weight, about 0.1 parts by weight to about 8 parts by weight, or about 0.1 parts by weight to about 5 parts by weight based on 100 parts by weight of the total weight of the composite solid electrolyte. When using this composite, a composite solid electrolyte with improved toughness can be prepared even with a smaller content compared to that of conventional fillers.

The composite solid electrolyte contains a composite containing a metal oxide, which is an inorganic oxide particle located on the surface of an organic fibrous filler, so that dispersibility is improved and strength and flexibility are enhanced, thereby enhancing toughness. Toughness is a measure of the ability of a plastic to absorb energy while being deformed without becoming brittle.

The composite solid electrolyte may include an organic fibrous filler and a coating layer containing a metal oxide located on the surface of the organic fibrous filler. Here, the thickness of the coating layer may be, for example, about 5 nm to about 100 nm.

In addition, when a roll press process is introduced to mass-produce the solid electrolyte layer and the solid electrolyte layer is thinned to secure cell energy density, it is very important to secure mechanical and structural stability. The composite solid electrolyte according to an embodiment may have improved toughness and ensure the stability of an electrode plate structure.

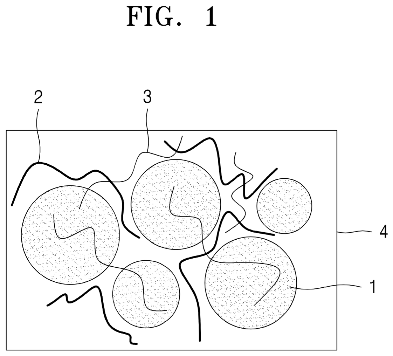

FIG. 1 schematically illustrates a structure of a composite solid electrolyte according to an embodiment.

Referring to FIG. 1, a composite solid electrolyte 4 includes a sulfide-containing solid electrolyte 1, a binder 2, and a filler composite 3. As shown in FIG. 1, the filler composite 3 is disposed to connect the sulfide-containing solid electrolytes 1 to each other and to be in contact with the binder 3.

The filler composite 3 is a reinforcing filler having a high aspect ratio, and has an excellent effect in improving the bending strength and strain of the composite solid electrolyte. In the disclosure, the "high aspect ratio" refers to an aspect ratio of 20 or more.

When using a filler having a high aspect ratio to form a solid electrolyte layer, the filler having a high aspect ratio is prone to self-agglomeration, thereby making it difficult to uniformly disperse this filler in the solid electrolyte layer. However, the filler composite according to an embodiment can be more easily dispersed due to the metal oxide present on the surface of the composite even though it has a high aspect ratio. In addition, when preparing a composite solid electrolyte, pre-mixing with a sulfide-containing solid electrolyte can effectively suppress the aggregation of the composite.

The organic fibrous filler may include, for example, a cellulose fiber, an acrylic fiber, an amide fiber, an olefin fiber, an ester fiber, a urethane fiber, a styrene fiber, an imide fiber, or a combination thereof

The organic fibrous filler according to an embodiment may be a cellulose fiber. The cellulose fiber may be, for example, a cellulose nanofiber. The cellulose nanofiber may be a cellulose fiber in which cellulose chains where hexose glucose molecules are linked by β-1,4 bonds form a bundle and which has an average diameter of nanometers among the fibers bonded through interchain hydrogen bonds.

The organic fibrous filler has an overall fiber shape, and has, for example, an average diameter (L1) of about 0.001 µm to about 10 µm, about 0.005 µm to about 1 µm, about 5 nm to about 100 nm, about 10 nm to about 100 nm, or about 10 nm to about 80 nm. The organic fibrous filler has an average length (L2) of about 0.1 µm to about 500 µm, about 0.1 µm to about 200 µm, about 0.1 µm to about 150 µm, about 1 µm to about 100 µm, about 5 µm to about 30 µm, about 5 µm to about 20 µm, or about 5 µm to about 10 µm.

In addition, the organic fibrous filler has an aspect ratio (L2/L1) of about 15 to about 100,000, about 50 to about 5,000, about 70 to about 5,000, about 80 to about 5,000, about 100 to about 5,000, about 110 to about 3,000, about 120 to about 2,000, or about 130 to about 1,000, which is expressed as a ratio of the average length (L2) to the average diameter (L1) of the organic fibrous filler. In addition, the average diameter (L1), average length (L2), and aspect ratio (L2/L1) of the composite may be calculated using a scanning electron microscope (SEM) or a transmission electron microscope (TEM). In the disclosure, the average diameter refers to a number average diameter, and the average length refers to a number average length.

The organic fibrous filler is a structure having an electrical conductivity of 1×10⁻⁶ Siemens per meter (S/m) or less. Due to such electrical conductivity characteristics, the organic fibrous filler is different from a carbon nanofiber used as a conductive material.

In addition, the electrical conductivity of the organic fibrous filler may be calculated by referring to the method using surface resistivity measured by a surface resistance meter.

When covering the surface of the organic fibrous filler, the surface coverage, which is a ratio of the mass of an inorganic metal material covering the surface thereof to 100% of the mass of the organic fibrous filler before covering, is about 0.1 % to about 1000 %, about 1 % to about 100 %, or about 5 % to about 50 %.

In the composite, the metal oxide may include, for example, silica (SiO₂), titanium dioxide (TiO₂), zinc oxide (ZnO), cobalt oxide, or a combination thereof.

The composite can effectively prevent the organic fibrous filler from agglomerating by having metal oxide nanoparticles evenly dispersed and stably fixed on the surface of the organic fibrous filler. The content of the metal oxide in the composite is about 10 parts by weight to about 100 parts by weight, about 10 parts by weight to about 80 parts by weight, about 10 parts by weight to about 50 parts by weight, about 10 parts by weight to about 30 parts by weight, about 10 parts by weight to about 20 parts by weight, about 12 parts by weight to about 18 parts by weight, about 13 parts by weight to about 17 parts by weight, or about 14 parts by weight to about 16 parts by weight based on 100 parts by weight of the organic fibrous filler. When the content of the metal oxide is within the above range, self-aggregation of the organic fibrous filler can be effectively suppressed, and thus a composite solid electrolyte in which the composite is evenly dispersed can be prepared, thereby preparing a composite solid electrolyte having improved strength and strain characteristics at the same time.

The average particle size of the metal oxide may be, for example, about 0.1 times to about 5 times, about 0.5 times to about 3 times, about 0.5 times to about 2 times, or about 1 time to about 2 times with respect to the average particle size of the organic fibrous filler. The average particle size of the metal oxide may be about 5 nm to about 100 nm, about 10 nm to about 80 nm, or about 20 nm to about 70 nm. Here, the average particle size may be an average particle diameter. When using the composite containing the metal oxide having such an average particle size, self-agglomeration of the organic fibrous filler having a high aspect ratio can be effectively suppressed, so that the composite can be evenly dispersed in the composite solid electrolyte.

In the composite solid electrolyte, the content of the composite is about 0.1 parts by weight to about 10 parts by weight, about 0.1 parts by weight to about 8 parts by weight, or about 0.1 parts by weight to about 5 parts by weight based on 100 parts by weight of the composite solid electrolyte. When the content of the composite is within the above range, a composite solid electrolyte with improved toughness can be manufactured. When the content of the composite is more than the above range, strain characteristics may deteriorate, and when the content of the composite is less than the above range, strength characteristics may not be sufficient.

In the composite solid electrolyte 4 of FIG. 1, the sulfide-containing solid electrolyte 1 is illustrated as a form in which particles having different sizes are mixed, but this does not mean that the sulfide-containing solid electrolyte 1 is limited to this form, and sulfide-containing solid electrolyte having the same average particle size may be used.

The composite solid electrolyte according to an embodiment may be prepared by preparing a composition for forming a composite solid electrolyte, the composition including a sulfide-containing solid electrolyte, a binder, and composite, and a solvent, and preparing a composite solid electrolyte layer using the composition for forming a composite solid electrolyte.

The composition for forming a composite solid electrolyte may include a dispersant.

The sulfide-containing solid electrolyte may include a first sulfide-containing solid electrolyte and a second sulfide-containing solid electrolyte.

The preparing of the composition for forming a composite solid electrolyte may include pre-mixing the first sulfide-containing solid electrolyte and the filler composite to prepare a first sulfide-containing solid electrolyte-composite composition, and adding the second sulfide-containing solid electrolyte, a binder, and a solvent to the first sulfide-containing solid electrolyte-composite composition and mixing them, wherein the first sulfide-containing solid electrolyte and the second sulfide-containing solid electrolyte are the same as or different from each other. Optionally, a binder, a solvent, a dispersant, or the like may be present in the first sulfide-containing solid electrolyte-composite composition, wherein the binder, solvent, dispersant, or the like in the first sulfide-containing solid electrolyte-composite composition may be the same or different as those added with the second sulfide-containing solid electrolyte.

The first sulfide-containing solid electrolyte-composite composition may include a first sulfide-containing solid electrolyte-composite structure.

However, by performing the pre-mixing process as described above, when the filler composite is mixed with a larger amount of the first sulfide-containing solid electrolyte, self-aggregation of the organic fibrous filler constituting the filler composite can be prevented, and the first sulfide-containing solid electrolyte can be disposed between the organic fibrous fillers and/or in the pores of the filler composite, thereby improving the dispersibility of the composite solid electrolyte and facilitating the interaction between the sulfide-containing solid electrolyte and the composite.

In the preparing of the first sulfide-containing solid electrolyte-composite composition, the content of the first sulfide-containing solid electrolyte may be about 65 parts by weight to about 90 parts by weight, about 75 parts by weight to about 90 parts by weight, or about 80 parts by weight to about 90 parts by weight based on 100 parts by weight of the total weight of the first sulfide-containing solid electrolyte and the composite, and the content of the composite is about 10 parts by weight to about 35 parts by weight, about 10 parts by weight to about 25 parts by weight, or about 10 parts by weight to about 20 parts by weight based on 100 parts by weight of the total weight of the first sulfide-containing solid electrolyte and the composite. When the content of the first sulfide-containing solid electrolyte and the content of the composite are within the above ranges, self-aggregation of the composite can be effectively prevented, so that a first sulfide-containing solid electrolyte-composite structure having excellent dispersibility can be prepared.

In the method of preparing a composite solid electrolyte, the content of the first sulfide-containing solid electrolyte may be about 5 parts by weight to about 20 parts by weight, about 5 parts by weight to about 18 parts by weight, about 6 parts by weight to about 15 parts by weight, or about 8 parts by weight to about 12 parts by weight based on 100 parts by weight of the second sulfide-containing solid electrolyte. When the content of the first sulfide-containing solid electrolyte is within the above range, a composite solid electrolyte having improved dispersibility and enhanced toughness can be prepared.

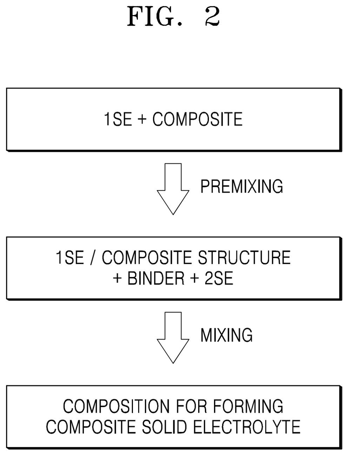

FIG. 2 is a view for more specifically explaining a method of preparing a composition for forming a composite solid electrolyte according to an embodiment In FIG. 2, first SE and second SE represent abbreviations for a first sulfide-containing solid electrolyte and a second sulfide-containing solid electrolyte, respectively.

Referring to FIG. 2, first, a first sulfide-containing solid electrolyte (SE) and a filler composite are pre-mixed to obtain a first sulfide-containing solid electrolyte composition, which is itself a composite having a structure. The first sulfide-containing solid electrolyte composite structure may have a cluster form. Through this premixing, the inherent aspect ratio of the filler composite can be maintained while reducing self-aggregation due to the difference in ductility and shear force between the first sulfide-containing solid electrolyte and the filler composite. As a result, the filler composite exists as individual fibrous particles without aggregation, and the first sulfide-containing solid electrolyte (first SE) is evenly distributed between the individual fibrous particles, so that a composite structure can be manufactured. The pre-mixing may be done either dry or wet, but may be done dry, for example.

For dry mixing, blade mixing, for example, may be used.

The mixing weight ratio of the first sulfide-containing solid electrolyte and the complex may be, for example, about 70:30 to about 95:5, or about 80:20 to about 90:10. When the mixing weight ratio of the first SE and the composite is within the above range, the interaction between the solid electrolyte and the composite is maximized, so that a composite solid electrolyte with improved strain can be prepared. In this mixing process, resonance acoustic mixer (RAM), or the like may be used.

Subsequently, the first sulfide-containing solid electrolyte/filler composite composition, e.g., having the aforementioned structure, prepared according to the above process, a binder, and a second solid electrolyte may be mixed to prepare a composition for forming a composite solid electrolyte. When preparing a composition for forming a composite solid electrolyte, a solvent may be added, and mixing may be performed, for example, by wet mixing.

The composition for forming a composite solid electrolyte may be formed into a layer, and the solvent subsequently removed to provide a composite solid electrolyte layer. The thickness of the composite solid electrolyte layer may be about 30 µm to about 200 µm, about 40 µm to about 150 µm, about 40 µm to about 120 µm, or about 50 µm to about 120 µm. When using a composite solid electrolyte layer having such a thickness, a solid secondary battery with improved cell energy density can be manufactured, and mass production can be made possible by easily introducing a roll press process.

A composite solid electrolyte layer may be prepared using the above-described composition for forming a composite solid electrolyte. The composition may be provided on a support to prepare a composite solid electrolyte, the solvent removed, and then the layer separated from the support, or the composition may be provided on an electrode and/or a solid electrolyte to prepare a composite solid electrolyte, and the solvent removed.

When preparing a composite solid electrolyte layer using the composition for forming a composite solid electrolyte, doctor blade, spin coating, roll coating, printing, offset, gravure, silk screen, spray, or the like may be used.

The composite solid electrolyte layer according to an embodiment may be, for example, a self-supporting membrane. The self-supporting membrane is, for example, a membrane capable of maintaining its shape without a support. The self-supporting membrane may be, for example, separated from the support and applied to a lamination process for manufacturing an electrode or a solid secondary battery. The self-supporting membrane may enable the implementation of various manufacturing processes for an electrode and/or a solid secondary battery.

The composite solid electrolyte layer according to an embodiment may have a membrane density of 60% or more, or 50 to 75%, after coating, and can be easily densified, so that pressurization process conditions can be relaxed.

In addition, the composite solid electrolyte may have a membrane density of 92% or more, or 92% to 99%, after pressurization, and has improved bending strength and strain. A solid electrolyte layer satisfying these characteristics can improve cell structural stability by suppressing microcracks and fractures.

The sulfide-containing solid electrolyte of the composite solid electrolyte may be a solid electrolyte having a crystal structure.

The sulfide-containing solid electrolyte may include an argyrodite-type compound. The sulfide-containing solid electrolyte may be, for example, at least one of Li₂S-P₂S₅, Li₂S-P₂S₅-LiX where X is a halogen element,

Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ where m and n are positive numbers and Z is Ge, Zn, or Ga, Li₂S-GeS₂, Li₂S-SiS₂-Li₃PO₄, Li₂S-SiS₂-LiₚMO_{q} where p and q are positive numbers and M is one of P, Si, Ge, B, Al, Ga, and In, Li₇₋ₓPS₆₋ₓClₓ (where 0≤x≤2), Li₇₋ₓPS₆₋ₓBrₓ (where 0≤x≤2), or Li₇₋ₓPS₆₋ₓIₓ (where 0≤x≤2).

The binder may include, for example, polyacrylate, polyvinyl alcohol, carboxymethyl cellulose, hydroxypropyl cellulose, diacetyl cellulose, polyvinyl chloride, carboxylated polyvinyl chloride, polyvinyl fluoride, ethylene oxide, polyvinyl pyrrolidone, polyurethane, polytetrafluoroethylene, polyvinylidene fluoride, polyethylene, polypropylene, styrene-butadiene rubber, (meth)acrylated styrene-butadiene rubber, hydrogenated nitrile-butadiene rubber (HNBR), epoxy resin, (meth)acrylic resin, polyester, nylon, lithium polyacrylate, a copolymer including unit structure derived from a polar monomer, which is at least one of nitrile-containing monomers and (meth)acrylate-containing monomers, and a unit structure derived from a nonpolar monomer, an ethylene vinyl acetate copolymer, or a combination thereof.

The filler composite according to an embodiment includes cellulose nanofiber; and silica particles attached to the surface of the cellulose nanofibers, wherein the cellulose nanofibers are a nanocellulose composite having at least a partially exposed surface, and the nanocellulose composite may have a plurality of pores formed among the cellulose nanofibers.

When preparing a composition for forming a composite solid electrolyte, any solvent capable of dissolving or dispersing a sulfide-containing solid electrolyte, a composite, or a binder may be used. The solvent may be, for example, octyl acetate, nonyl acetate, heptyl acetate, or a combination thereof.

According to another embodiment, a solid secondary battery may include a cathode, an anode, and a solid electrolyte layer disposed between the cathode and the anode,
wherein the solid electrolyte layer may include a composite solid electrolyte,
the composite solid electrolyte may include a sulfide-containing solid electrolyte, a binder, and a composite, and
the composite may include an organic fibrous filler and a metal oxide disposed on the surface of the organic fibrous filler.

According to another embodiment, a solid secondary battery may include a cathode, an anode current collector, and a solid electrolyte layer disposed between the cathode and the anode current collector, wherein the solid electrolyte layer may include a first solid electrolyte layer and a second solid electrolyte layer, the first solid electrolyte layer may be disposed in contact with the cathode,
the second solid electrolyte layer may be disposed in contact with the anode, and at least one of the first solid electrolyte layer or the second solid electrolyte layer may include a composite solid electrolyte, the composite solid electrolyte includes a sulfide-containing solid electrolyte, a binder, and a composite, and the composite may include an organic fibrous filler and a metal oxide disposed on the surface of the organic fibrous filler.

The second solid electrolyte layer may include a composite solid electrolyte, the composite solid electrolyte may include a sulfide-containing solid electrolyte, a binder, and a composite, and the composite may include an organic fibrous filler and a metal oxide disposed on the surface of the organic fibrous filler.

The solid secondary battery according to an embodiment may be a hybrid type battery further including a liquid electrolyte in addition to the solid electrolyte. Here, the liquid electrolyte may include at least one of a lithium salt, an organic solvent, or an ionic liquid.

Any lithium salt that can be used as a lithium salt in the relevant technical field may be used. The lithium salt may be, for example, LiPF₆, LiBF₄, LiSbF₆, LiAsF₆, LiClO₄, LiCF₃SO₃, Li(CF₃SO₂)₂N, Li(FSO₂)₂N, LiC₄F₉SO₃, LiAlO₂, LiAlCl₄, LiN(CₓF₂ₓ₊₁SO2)(C_{y}F_{2y+1}SO₂) (where x and y are natural numbers), LiCl, LiI or a combination thereof. The concentration of the lithium salt included in the liquid electrolyte may be about 0.1 molar (M) to about 5 M.

The ionic liquid may refer to a salt in a liquid state at room temperature or a room temperature molten salt that has a melting point below room temperature and includes ions. The ionic liquid may comprise: a) at least one cation of an ammonium-containing cation, a pyrrolidinium-containing cation, a pyridinium-containing cation, a pyrimidinium-containing cation, an imidazolium-containing cation, a piperidinium-containing cation, a pyrazolium-containing cation, an oxazolium-containing cation, a pyridazinium-containing cation, a phosphonium-containing cation, a sulfonium-containing cation, a triazolium-containing cation, or a combination thereof; and b) at least one anion of BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, SO₄²⁻, CF₃SO₃⁻, (FSO₂)₂N⁻, (C₂F₅SO₂)2N⁻, (C₂F₅SO₂)(CF₃SO₂)N⁻, or (CF₃SO₂)₂N⁻. The ionic liquid may be, for example, at least one of N-methyl-N-propylpyrrolidinium bis(trifluoromethanesulfonyl)imide, N-butyl-N-methylpyrrolidium bis(3-trifluoromethylsulfonyl)imide, 1-butyl-3-methylimidazolium bis(trifluoromethylsulfonyl)imide, or 1-ethyl-3-methylimidazolium bis(trifluoromethylsulfonyl)amide. The polymer ionic liquid may contain repeating units including: a) at least one cation of an ammonium-containing cation, a pyrrolidinium-containing cation, a pyridinium-containing cation, a pyrimidinium-containing cation, an imidazolium-containing cation, a piperidinium-containing cation, a pyrazolium-containing cation, an oxazolium-containing cation, a pyridazinium-containing cation, a phosphonium-containing cation, a sulfonium-containing cation, a triazolium-containing cation, or a combination thereof; and b) at least one anion of BF₄⁻, PF₆⁻, AsF₆⁻, SbF₆⁻, AlCl₄⁻, HSO₄⁻, ClO₄⁻, CH₃SO₃⁻, CF₃CO₂⁻, (CF₃SO₂)₂N⁻, (FSO₂)₂N⁻, Cl⁻, Br⁻, I⁻, SO₄²⁻, CF₃SO₃⁻, (C₂F₅SO₂)₂N⁻, (C₂F₅SO₂)(CF₃SO₂)N⁻, NO₃⁻, Al₂Cl₇⁻, (CF₃SO₂)₃C⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, CF₃(SO₂)₂CH-, (SF₅)₃C⁻, or (O(CF₃)₂C₂(CF₃)₂O)₂PO⁻.

Any organic solvent known to be used in liquid electrolytes may be used.

The solid secondary battery may be, for example, an all-solid-state secondary battery.

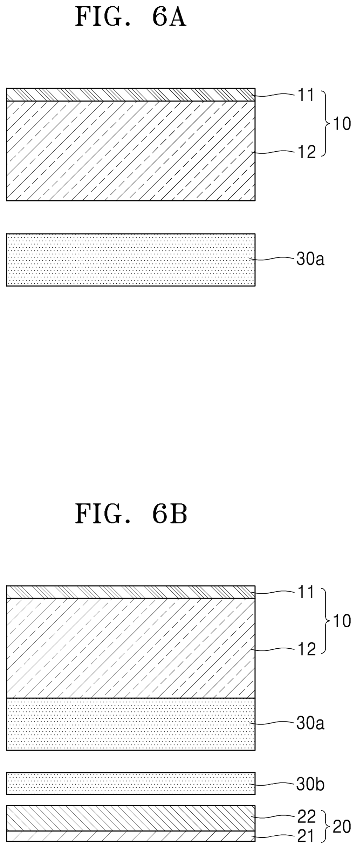

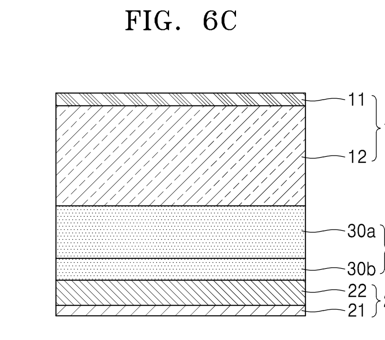

FIGS. 6A to 6C are views for explaining a method for manufacturing a solid secondary battery according to an embodiment and a solid secondary battery manufactured according to the method. As shown in FIG. 6C, the solid secondary battery has two solid electrolyte layers 30a and 30b.

As illustrated in FIG. 6A, first, a first solid electrolyte layer 30a may be laminated on a cathode 10 including a cathode current collector 11 and a cathode active material layer 12 to prepare a first laminate. First pressing may be performed on the first laminate.

The first solid electrolyte layer 30a may be a composite solid electrolyte according to an embodiment. The composite solid electrolyte may include a first sulfide-containing solid electrolyte as a first solid electrolyte, a binder, and a composite. When the first solid electrolyte layer 30a includes a composite including an organic fibrous filler and a metal oxide disposed on the surface of the organic fibrous filler, the toughness of a cathode-solid electrolyte subassembly is improved, so that workability during battery assembly can be improved and a failure rate can be reduced.

The first pressing may be, for example, roll pressing, uni-axial pressing, flat pressing, warm isotactic pressing (WIP), cold isotactic pressing (CIP), or the like. A pressure applied during pressing may be, for example, higher than 300 MPa and 750 MPa or lower. The pressure may be applied for about 5 milliseconds (ms) to about 60 min. The pressing may be performed at a temperature of, for example, about room temperature to about 90 °C or about 20 °C to about 90 °C. Alternatively, the pressing may be performed at a high temperature of 100 °C or higher. For example, the first pressing may be performed at a temperature of about 80 °C to about 90 °C, or 85 °C and a pressure of about 400 MPa to about 600 MPa, about 450 MPa to about 550 MPa, or 500 MPa.

Separately, a first anode active material layer 22 may be laminated on an anode current collector 21 to form an anode 20 (refer to FIG. 6B).

The second solid electrolyte layer 30b and the anode 20 may be disposed on the first solid electrolyte membrane 30a of the first laminate to prepare a second laminate.

According to an embodiment, the second solid electrolyte layer 30b may include a second sulfide-containing solid electrolyte, which is a second solid electrolyte, and a binder. The second solid electrolyte layer 30b may not include a composite, unlike the first solid electrolyte layer 30a.

According to another embodiment, the second solid electrolyte layer 30b may include a composite solid electrolyte according to an embodiment, similar to the first solid electrolyte layer 30a. In this way, the second solid electrolyte layer 30b may include a composite including a second sulfide-containing solid electrolyte, a binder, an organic fibrous filler, and a metal oxide disposed on the surface of the organic fibrous filler. In this way, when the second solid electrolyte layer 30b includes a composite, the toughness of an anode-solid electrolyte subassembly is improved, so that workability during battery assembly can be improved and a failure rate can be reduced.

Second pressing may be performed on the second laminate, thereby completing the manufacture of a solid secondary battery according to an embodiment. The second pressing may be performed using a pressing process used in the first pressing, and may be performed under relaxed conditions compared to the first pressing. That is, a pressure applied during the second pressing may be, for example, about 150 MPa to about 300 MPa. The pressure may be applied for about 5 ms to about 60 min. The pressing may be performed at a temperature of, for example, about room temperature to about 90 °C or about 20 °C to about 90 °C. Alternatively, the pressing may be performed at a high temperature of 100 °C or higher. For example, the second pressing may be performed at a temperature of about 80 °C to about 90 °C, about 82 °C to about 88 °C, or 85 °C and a pressure of about 200 MPa to about 250 MPa.

A method of manufacturing a solid secondary battery, according to another embodiment, will be described as follows A first laminate may be manufactured in the above-described manner.

The second solid electrolyte layer 30b may be laminated on the anode 20 including the anode current collector 21 and the first anode active material layer 22 to prepare a second laminate. Second pressing may be performed on the second laminate. Here, the second solid electrolyte layer 30b may include a second solid electrolyte and a binder.

In the second pressing, the same pressing process as that used in the first pressing may be used. The first laminate and the second laminate may be adhered to each other, followed by third pressing, to thereby complete the manufacture of a solid secondary battery according to an embodiment. The third pressing may be performed using a pressing process used in the first pressing or the second pressing, and may be performed under relaxed conditions compared to the first pressing or the second pressing. A solid secondary battery may be manufactured by a lamination method under no pressure without additional pressing.

In other embodiments, the second solid electrolyte layer 30b may be laminated on the cathode 10, thereby forming a first laminate.

As illustrated in FIG. 6C, when the second solid electrolyte layer 30b is in contact with an anode, the adhesion between the anode and the second solid electrolyte layer may be maintained well even when the volume or thickness of the anode changes during charging and discharging, and it is suitable for the formation of an adhesive interface even under relatively low second pressing conditions, thus enabling stable cell operation.

As illustrated in FIG. 6C, when the first solid electrolyte layer 30a is in contact with a cathode, good adhesion between the first laminate and the second laminate may be formed even under relatively low third pressing conditions, and it is suitable for long-term maintenance of an adhesive interface, thus enabling more stable cell operation.

A solid secondary battery according to an embodiment may be, for example, an all-solid-state secondary battery.

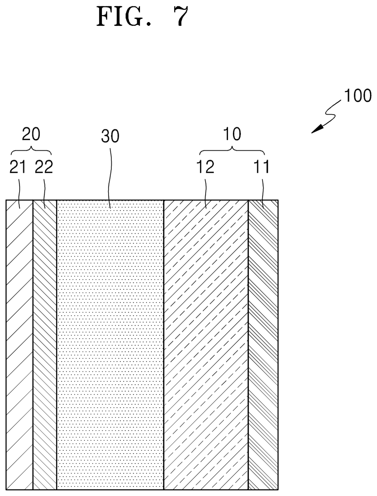

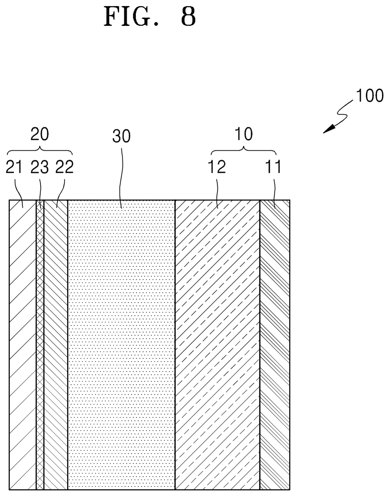

FIG. 7 and FIG. 8 are views for explaining a solid secondary battery 1 according to an embodiment.

A solid secondary battery 1 includes a cathode 10, a solid electrolyte layer 30, and an anode 20. The solid electrolyte layer 30 may include a composite solid electrolyte according to an embodiment.

### Cathode

The cathode 10 may include a cathode current collector 11 and a cathode active material layer 12.

The cathode current collector 11 may be a plate, foil or the like made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or any alloy thereof.

The cathode active material layer 12 may include, for example, a cathode active material.

The cathode active material may be a cathode active material capable of reversible intercalation and deintercalation of lithium ions. The cathode active material may be, but is not limited to, for example, a lithium transition metal oxide such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate, nickel sulfide, copper sulfide, lithium sulfide, iron oxide, or vanadium oxide, and any cathode active material that may be used in the art is possible. These cathode active materials may be used alone, or a combination of at least two thereof may be used.

The lithium transition metal oxide may include, for example, a compound represented by one of the following formulae: LiₐA_{1-b}B_{b}D₂ (where 0.90 ≤ a ≤ 1 and 0 ≤ b ≤ 0.5); LiₐE_{1-b}B_{b}O_{2-c}D_{c} (where 0.90 ≤ a ≤ 1, 0 ≤ b ≤ 0.5, and 0 ≤ c ≤ 0.05); LiE_{2-b}B_{b}O_{4-c}D_{c} (where 0 ≤ b ≤ 0.5 and 0 ≤ c ≤ 0.05); LiₐNi_{1-b-c}Co_{b}B_{c}D_{α} (where 0.90 ≤ a ≤ 1, 0 ≤ b ≤ 0.5, 0 ≤ c ≤ 0.05, and 0 < α ≤ 2); LiₐNi_{1-b-c}Co_{b}B_{c}O_{2-α}F_{α} (where 0.90 ≤ a ≤ 1, 0 ≤ b ≤ 0.5, 0 ≤ c ≤ 0.05, and 0 < α < 2); LiₐNi_{1-b-c}Co_{b}B_{c}O_{2-α}F_{α} (where 0.90 ≤ a ≤ 1, 0 ≤ b ≤ 0.5, 0 ≤ c ≤ 0.05, and 0 < α < 2); LiₐNi_{1-b-c}Mn_{b}B_{c}D_{α} (where 0.90 ≤ a ≤ 1, 0 ≤ b ≤ 0.5, 0 ≤ c ≤ 0.05, and 0 < α ≤ 2); LiₐNi_{1-b-c}Mn_{b}B_{c}O_{2-α}F_{α} (where 0.90 ≤ a ≤ 1, 0 ≤ b ≤ 0.5, 0 ≤ c ≤ 0.05, and 0 < α < 2); LiₐNi_{1-b-c}Mn_{b}B_{c}O_{2-α}F_{α} (where 0.90 ≤ a ≤ 1, 0 ≤ b ≤ 0.5, 0 ≤ c ≤ 0.05, and 0 < α < 2); LiₐNi_{b}E_{c}G_{d}O₂ (where 0.90 ≤ a ≤ 1, 0 ≤ b ≤ 0.9, 0 ≤ c ≤ 0.5, and 0.001 ≤ d ≤ 0.1); LiₐNi_{b}Co_{c}Mn_{d}GeO₂ (where, 0.90 ≤ a ≤ 1, 0 ≤ b ≤ 0.9, 0 ≤ c ≤ 0.5, 0 ≤ d ≤0.5, and 0.001 ≤ e ≤ 0.1); LiₐNiG_{b}O₂ (where, 0.90 ≤ a ≤ 1, and 0.001 ≤ b ≤ 0.1); LiₐCoG_{b}O₂ (where, 0.90 ≤ a ≤ 1, and 0.001 ≤ b ≤ 0.1); LiₐMnG_{b}O₂ (where, 0.90 ≤ a ≤ 1, and 0.001 ≤ b ≤ 0.1); LiₐMn₂G_{b}O₄ (where, 0.90 ≤ a ≤ 1, and 0.001 ≤ b ≤ 0.1);QO₂; QS₂; LiQS₂; V₂O₅; LiV₂O₅; LiIO₂; LiNiVO₄; Li_{(3-f)}J₂(PO₄)₃ (where 0 ≤ f ≤ 2); Li_{(3-f)}Fe₂(PO₄)₃ (where 0 ≤ f ≤ 2); and LiFePO₄. In the formulae of these compounds, A may be nickel (Ni), cobalt (Co), manganese (Mn), or a combination thereof, B may be aluminum (Al), Ni, Co, Mn, chromium (Cr), iron (Fe), magnesium (Mg), strontium (Sr), vanadium (V), a rare earth element, or a combination thereof, D may be oxygen (O), fluorine (F), sulfur (S), phosphorus (P), or a combination thereof, E may be Co, Mn, or a combination thereof, F may be F, S, P, or a combination thereof, G may be Al, Cr, Mn, Fe, Mg, lanthanum (La), cerium (Ce), Sr, V, or a combination thereof, Q may be titanium (Ti), molybdenum (Mo), Mn, or a combination thereof, I may be Cr, V, Fe, scandium (Sc), yttrium (Y), or a combination thereof, and J may be V, Cr, Mn, Co, Ni, copper (Cu), or a combination thereof. The above-mentioned compound with a coating layer on the surface may be used, or a combination of the compound described above and another compound having a coating layer may be used. The coating layer disposed on the surface of the above-described compound may include, for example, a coating element compound, such as an oxide of a coating element, a hydroxide of a coating element, an oxyhydroxide of a coating element, an oxycarbonate of a coating element, or a hydroxycarbonate of a coating element. The compound constituting the coating layer may be amorphous or crystalline. The coating element included in the coating layer may be Mg, Al, Co, potassium (K), sodium (Na), calcium (Ca), silicon (Si), Ti, V, tin (Sn), germanium (Ge), gallium (Ga), boron (B), arsenic (As), zirconium (Zr), or a combination thereof. A coating layer formation method may be selected from methods that do not adversely affect the physical properties of the cathode active material. The coating layer formation method may be, for example, spray coating, immersion, or the like. The coating layer formation methods will be obvious to one of ordinary skill in the art, and thus, detailed descriptions thereof will not be provided herein.

The cathode active material may include, for example, a lithium salt of a transition metal oxide having a layered rock-salt-type structure, among the above-described lithium transition metal oxides. The term "layered rock-salt-type structure" may refer to, for example, a structure in which oxygen atomic layers and metal atomic layers are regularly arranged alternately in the <111> direction of a cubic rock-salt-type structure, in which each atomic layer forms a two-dimensional plane. The term "cubic rock-salt-type structure" refers to a sodium chloride (NaCl) type structure, which is a type of crystal structure, and for example, refers to a structure in which face-centered cubic (fcc) lattices respectively formed of cations and anions are shifted by only a half of the ridge of each unit lattice. The lithium transition metal oxide having such a layered rock-salt-type structure may be, for example, a ternary lithium transition metal oxide such as LiNiₓCo_{y}Al_{z}O₂ (NCA) or LiNiₓCo_{y}Mn_{z}O₂ (NCM) (where 0 < x < 1, 0 < y < 1, 0 < z < 1, and x + y + z = 1). When the cathode active material includes a ternary lithium transition metal oxide having a layered rock-salt-type structure, the energy density and thermal stability of the all-solid-state secondary battery 1 may further be improved.

The cathode active material may be covered by a coating layer as described above. The coating layer may be any coating layer known as a coating layer for a cathode active material of a solid secondary battery. The coating layer may be, for example, Li₂O-ZrO₂ or the like.

When the cathode active material contains nickel (Ni) as a ternary lithium transition metal oxide such as NCA or NCM, the capacity density of the solid secondary battery 1 may be increased, and thus, metal elution from the cathode active material in a charged state may be reduced. As a result, the solid secondary battery 1 may have improved cycle characteristics in a charged state

The cathode active material may have a particle shape, such as a true spherical shape, an elliptical shape, or a spherical shape. The particle diameter of the cathode active material is not limited, and is within a range suitable for a cathode active material of an existing all-solid secondary battery. The content of the cathode active material in the cathode 10 is not limited, and may be within a range applicable to a cathode of an existing solid secondary battery.

The cathode 10 may further include, for example, additives such as a conductive agent, a binder, a filler, a dispersant, and an auxiliary ion-conducting agent, in addition to the above-described cathode active material. Non-limiting examples of these conductive agents may include graphite, carbon black, acetylene black, Ketjen black, carbon nanotubes, carbon nanofibers, and metal powder. The binder may be, for example, styrene butadiene rubber (SBR), polytetrafluoroethylene, polyvinylidene fluoride, polyethylene, or the like. As the coating agent, the dispersant, the auxiliary ion-conducting agent, and the like that may be mixed in fabricating the cathode 10, known materials generally used in electrodes of solid secondary batteries may be used.

The cathode 10 may further include a solid electrolyte. The solid electrolyte included in the cathode 10 may be similar to or different from a solid electrolyte included in the solid electrolyte layer 30.

The solid electrolyte included in the cathode 10 may be, for example, a sulfide-containing solid electrolyte. As the sulfide-containing solid electrolyte, sulfide-containing solid electrolytes used in the solid electrolyte membrane 30 may be used.

In other embodiments, the cathode 10 may be impregnated with, for example, a liquid electrolyte. The liquid electrolyte may include a lithium salt and at least one of an ionic liquid and a polymer ionic liquid. The liquid electrolyte may be non-volatile. The liquid electrolyte is the same as that described for the liquid electrolyte of the solid secondary battery, so it will be omitted.

The content of the liquid electrolyte impregnated in the cathode 10 may be in a range of about 0 parts by weight to about 100 parts by weight, about 0 parts by weight to about 50 parts by weight, about 0 parts by weight to about 30 parts by weight, about 0 parts by weight to about 20 parts by weight, about 0 parts by weight to about 10 parts by weight, or about 0 parts by weight to about 5 parts by weight, based on 100 parts by weight of the cathode active material layer 12 not including the liquid electrolyte.

### Solid electrolyte layer

The solid electrolyte layer 30 may be disposed between the cathode 10 and the anode 20, and include the composite solid electrolyte according to an embodiment. The composite solid electrolyte includes an organic fibrous filler and a metal oxide positioned on the surface of the organic fibrous filler.

### Anode

Referring to FIG. 8, the anode 20 may include an anode current collector 21 and a first anode active material layer 22. The anode current collector 21 may include, for example, a base film and a metal layer on one or both sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. The base film softens or liquefies when a short circuit occurs, by including an insulating thermoplastic polymer, and thus a rapid increase in current may be suppressed by blocking battery operation. The metal layer may include, for example, copper (Cu), stainless steel, titanium (Ti), iron (Fe), cobalt (Co), nickel (Ni), or an alloy thereof. The anode current collector may further include a metal chip and/or a lead tab. More details on the base film, the metal layer, the metal chip, and the lead tab of the anode current collector may be referred to those provided below in connection with the cathode current collector 11. When the anode current collector has this structure, the weight of the anode may be reduced, resulting in improved energy density of a solid secondary battery.

The anode current collector 21 may be, for example, in the form of a plate or foil.

The first anode active material layer may include a carbon-containing anode active material, a first metal, a metalloid, or a combination thereof.

In the first anode active material layer, the carbon-containing anode active material may include amorphous carbon. The amorphous carbon may be, for example, carbon black (CB), acetylene black (AB), furnace black (FB), Ketjen black (KB), graphene, carbon nanotubes, carbon nanofibers, or the like. However, the disclosure is not limited thereto and any carbon that is classified as amorphous carbon in the art is possible.

The first metal or the metalloid may include, but is not limited to, at least one of indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), and zinc (Zn), or any metal anode active material or metalloid anode active material that forms an alloy or compound with lithium in the art may be used.

The first anode active material layer may include one anode active material including carbon-containing active materials and metal or metalloid anode active materials, or may include a combination of a plurality of different anode active materials. For example, the first anode active material layer may contain only amorphous carbon, or may include at least one metal or metalloid including indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), or zinc (Zn). In another embodiment, the first anode active material layer may include only amorphous carbon, or may include a composite of amorphous carbon and at least one metal or metalloid anode active material including indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), or zinc (Zn). A composite ratio of amorphous carbon to silver or the like in the composite thereof may be in a range of, for example, about 10:1 to about 1:2, about 5:1 to about 1:1, or about 4:1 to about 2:1 on a weight ratio basis. However, the disclosure is not limited to this range, and the composite ratio may be selected depending on the required characteristics of the all-solid-state secondary battery. When the first anode active material layer has such composition, the cycle characteristics of the solid secondary battery may further be improved.

The anode active material included in the first anode active material layer may include, for example, a mixture of primary particles including amorphous carbon and secondary particles including a metal or a metalloid. The mixture may be a simple mixture of primary particles and secondary particles or a resulting mixture physically bound by a binder. The metal or the metalloid may include, for example, at least one of indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), or zinc (Zn). In another embodiment, the metalloid may be a semiconductor. The content of the secondary particles may be in a range of about 8 weight percent (wt%) to about 60 wt%, about 10 wt% to about 50 wt%, about 15 wt% to about 40 wt%, or about 20 wt% to about 30 wt%, with respect to a total weight of the mixture. When the content of the secondary particles is within the above range, for example, the cycle characteristics of the solid secondary battery 1 may further be improved.

The first anode active material layer may include: i) a composite of primary particles including amorphous carbon and secondary particles including a metal or a metalloid; or ii) a mixture of primary particles including amorphous carbon and secondary particles including a metal or a metalloid, and the content of the secondary particles may be in a range of about 1 wt% to about 60 wt% with respect to the total weight of the composite.

The first anode active material layer may have a thickness of, for example, about 10 nm to about 10 µm, about 100 nm to about 10 µm, about 200 nm to about 10 µm, about 300 nm to about 10 µm, about 400 nm to about 10 µm, about 500 nm to about 10 µm, about 1 µm to about 10 µm, about 1 µm to about 9 µm, about 1 µm to about 8 µm, about 2 µm to about 7 µm, or about 3 µm to about 7 µm. When the thickness of the first anode active material layer is within the above range, short circuit of the solid secondary battery may be suppressed, and the cycle characteristics thereof may be improved.

In another embodiment, the first anode active material layer 22 may include a composite anode active material. The composite anode active material may include, for example, a carbon-containing support and a metal-containing anode active material supported on the carbon-containing support. When the composite anode active material has such a structure, localization of the metal-containing anode active material in the first anode active material layer may be prevented and uniform distribution thereof may be obtained. As a result, the cycle characteristics of the solid secondary battery 1 including the first anode active material layer 22 may further be improved.

The metal-containing anode active material supported on the carbon-containing support may include, for example, a metal, a metal oxide, a composite of a metal and a metal oxide, or a combination thereof. Non-limiting examples of the metal may include gold (Au), platinum (Pt), palladium (Pd), silicon (Si), silver (Ag), aluminum (Al), bismuth (Bi), tin (Sn), tellurium (Te), and zinc (Zn). Non-limiting examples of the metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, and zinc (Zn) oxide. The metal oxide may include, for example, AuₓO_{y} (where 0<x≤2 and 0<y≤3), PtₓO_{y} (where 0<x≤1 and 0<y≤2), PdₓO_{y} (where 0<x≤1 and 0<y≤1), SiₓO_{y} (where 0<x≤1 and 0<y≤2), AgₓO_{y} (where 0<x≤2 and 0<y≤1), AlₓO_{y} (where 0<x≤2 and 0<y≤3), BiₓO_{y} (where 0<x≤2 and 0<y≤3), SnₓO_{y} (where 0<x≤1 and 0<y≤2), TeₓO_{y} (where 0<x≤1 and 0<y≤3), ZnₓO_{y} (where 0<x≤1 and 0<y≤1), or a combination thereof. The composite of a metal and a metal oxide may include, for example, a composite of Au and AuₓO_{y} (where 0<x≤2 and 0<y≤3), a composite of Pt and PtₓO_{y} (where 0<x≤1 and 0<y≤2), a composite of Pd and PdₓO_{y} (where 0<x≤1 and 0<y≤1), a composite of Si and SiₓO_{y} (where 0<x≤1 and 0<y≤2), a composite of Ag and AgₓO_{y} (where 0<x≤2 and 0<y≤1), a composite of Al and AlₓO_{y} (where 0<x≤2 and 0<y≤3), a composite of Bi and BiₓO_{y} (where 0<x≤2 and 0<y≤3), a composite of Sn and SnₓO_{y} (where 0<x≤1 and 0<y≤2), a composite of Te and TeₓO_{y} (where 0<x≤1 and 0<y≤3), a composite of Zn and ZnₓO_{y} (where 0<x≤1 and 0<y≤1), or a combination thereof.

The carbon-containing support may be, for example, amorphous carbon. The amorphous carbon may be, for example, carbon black (CB), acetylene black (AB), furnace black (FB), Ketjen black (KB), graphene, activated carbon, carbon nanofibers (CNFs), or carbon nanotubes (CNTs). However, the disclosure is not limited thereto and any carbon that is classified as amorphous carbon in the art is possible. Amorphous carbon may be carbon that does not have crystallinity or has very low crystallinity and may be distinguished from crystalline carbon or graphitic carbon. The carbon-containing material may be, for example, a carbon-containing anode active material.

The composite anode active material may have, for example, a particle form. The particle diameter of the composite anode active material in particle form may be in a range of, for example, about 10 nm to about 4 µm, about 10 nm to about 1 µm, about 10 nm to about 500 nm, about 10 nm to about 200 nm, or about 10 nm to about 100 nm. When the particle diameter of the composite anode active material is within the above range, reversible absorption and/or desorption of lithium during charging and discharging may be more facilitated. The metal-containing anode active material supported on the support may have, for example, a particle form. The particle diameter of the metal-containing anode active material may be in a range of, for example, about 1 nm to about 200 nm, about 1 nm to about 150 nm, about 5 nm to about 100 nm, or about 10 nm to about 50 nm. The carbon-containing support may have, for example, a particle form. The particle diameter of the carbon-containing support may be in a range of, for example, about 10 nm to about 2 µm, about 10 nm to about 1 µm, about 10 nm to about 500 nm, about 10 nm to about 200 nm, or about 10 nm to about 100 nm. When the particle diameter of the carbon-containing support is within the above range, the carbon-containing support may be more uniformly arranged in the first anode active material layer. The carbon-containing support may be, for example, nanoparticles having a particle diameter of 500 nm or less. The particle diameter of the composite anode active material, the particle diameter of the metal-containing anode active material, and the particle diameter of the carbon-containing support may be, for example, average particle diameters. The average particle diameter may be, for example, a median diameter (D50) measured by using a laser particle size distribution analyzer. In other embodiments, the average particle diameter may be, for example, determined automatically by using software from an electron microscope image, or may be determined manually by manual means.

In the solid secondary battery 1 according to an embodiment, as illustrated in FIG. 8, a second anode active material layer 23 may be disposed between the anode current collector 21 and the first anode active material layer 22.

The second anode active material layer 23 may be disposed during battery assembly, or may be absent during battery assembly and may be formed as a precipitation layer after charging.

The second anode active material layer may include a second metal material.

The metal material may be a second metal, a lithium alloy of lithium and the second metal, or a combination thereof.

The second metal may include at least one of lithium, silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a lithium alloy.

The lithium alloy may include: lithium; and silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a combination thereof.

The second anode active material layer may be lithium metal or a third metal applied onto a current collector. In another embodiment, the second anode active material layer may be lithium metal precipitated during charging or a lithium alloy layer. The volume and thickness of the second anode active material layer may increase due to lithium precipitation during charging. In an embodiment, the second metal may form a Li-M2 alloy through a reversible reaction during charging and discharging of the solid secondary battery. In a process of charging or disposing the all-solid-state secondary battery, or both processes, the second anode active material layer may be formed as a precipitation layer or a deposition layer, and the second anode active material layer may be a lithium metal layer or a lithium metal alloy layer.

In the process of charging or disposing the all-solid-state secondary battery, or both processes, the second metal in the second anode active material layer may form an alloy with lithium.

The second anode active material layer may be disposed on, for example, adhered to the first anode active material layer through pressing. During the pressing process, some of the lithium contained in the second anode active material layer may be injected into the first anode active material layer.

Disposition (e.g., bonding) may be a pressure compression process. During the pressing process, some of the lithium contained in the second anode active material layer may be injected into the first anode active material layer.

In another embodiment, in a process of charging or disposing the all-solid-state secondary battery, or both processes, the second anode active material layer may further be formed as a precipitation layer. The second anode active material layer may be a lithium metal layer or a lithium metal alloy layer. The second anode active material layer may have a thickness of, for example, 1 µm or more, 5 µm or more, or 10 µm or more, or in a range of about 10 µm to about 1,000 µm, about 10 µm to about 500 µm, about 10 µm to about 200 µm, about 10 µm to about 100 µm, or about 10 µm to about 50 µm.

### Manufacture of cathode

Materials constituting the cathode active material layer 12, i.e., a cathode active material, a binder, and the like, may be added to a non-polar solvent to prepare a slurry. The prepared slurry may be applied onto the cathode current collector 11 and dried.

The cathode current collector 11 may include, for example, a metal-containing substrate or a carbon-containing substrate. As the metal-containing substrate, for example, a porous body, mesh, plate or foil made of stainless steel, nickel (Ni), aluminum (Al), indium (In), copper (Cu), magnesium (Mg), titanium (Ti), iron (Fe), cobalt (Co), nickel (Ni), zinc (Zn), germanium (Ge), lithium (Li), or an alloy thereof may be used. The carbon-containing substrate may include, for example, a one-dimensional carbon-containing material such as carbon fibers or carbon tubes; a two-dimensional carbon-containing material such as graphite or graphene; or a combination thereof. The cathode current collector 12 may further include a binder.

The cathode current collector 12 may be omitted.

The obtained laminate may be pressed to manufacture the cathode 10. Pressing may be, for example, pressing using a roll press, a flat press, or hydrostatic pressure. However, the disclosure is not limited to these methods, and any pressing used in the art is possible. The pressing process may be omitted. A mixture of materials constituting the cathode active material layer 12 may be compacted and molded into a pellet form or stretched (molding) into a sheet form, thereby completing the manufacture of the cathode 10. When the cathode 10 is manufactured by this method, the cathode current collector 11 may be omitted. In another embodiment, the cathode 10 may be used after being impregnated with an electrolyte solution.

### Manufacture of all-solid-state secondary battery

The anode 20, the solid electrolyte layer 30, and the cathode 10 may be prepared, and the cathode 10 and the anode 20 may be stacked with the solid electrolyte layer 30 interposed therebetween, or pressed after stacking, to thereby complete the manufacture of the solid secondary battery 1.

The pressing may be, for example, roll pressing, uni-axial pressing, flat pressing, warm isotactic pressing (WIP), or cold isotactic pressing (CIP). However, the disclosure is not limited to these methods, and any pressing used in the art is possible. A pressure applied during pressing may be in a range of, for example, about 50 MPa to about 750 MPa. The pressure may be applied for about 5 ms to about 60 min. The pressing may be performed at a temperature of, for example, 90 °C or lower, or about 20 °C to about 90 °C. In another embodiment, the pressing may be performed at a high temperature of 100 °C or higher.

Next, the cathode 10 may be disposed on one surface of the solid electrolyte layer 30 to which the anode 20 is adhered, followed by pressing at a certain pressure, thereby disposing, e.g., adhering the cathode 10 on/to the surface of the solid electrolyte layer 30. In another embodiment, the cathode 10 impregnated with a liquid electrolyte may be stacked without pressing, to manufacture a battery.

The pressing may be, for example, roll pressing, uni-axial pressing, flat pressing, warm isotactic pressing (WIP), or cold isotactic pressing (CIP). However, the disclosure is not limited to these methods, and any pressing used in the art is possible. A pressure applied during pressing may be in a range of, for example, about 50 MPa to about 750 MPa. The pressure may be applied for about 5 ms to about 60 min. The pressing may be performed at a temperature of, for example, about room temperature to about 90 °C or about 20 °C to about 90 °C. In other embodiments, the pressing may be performed at a high temperature of 100 °C or higher.

The present inventive concept will be described in further detail with reference to the following examples and comparative examples.

### Preparation Example 1: Nanocellulose composite (Silica-Cellulose NanoFiber (CNF))

A nanocellulose composite was prepared according to the preparation method disclosed in Korean Patent Publication No. 10-2020-0042220.

45.45 g of a 2.2 wt% cellulose nanofiber slurry was centrifuged at a relative centrifugal force (RFC) of 7000 g for 10 minutes together with water. Then, solid cellulose nanofibers were taken and dispersed with 240 grams (g) of ethanol using a homogenizer for 1 minute, and then ultrasonicated for 1 hour to obtain a solution.

Then, 1 milliliter (mL) of tetraethyl silicate and 4 mL of ammonia water (28 wt%) were added to the solution while stirring the solution at a speed of 250 revolutions per minute (rpm). The resultant was subjected to a sol-gel reaction at room temperature (25 °C) for 2 hours, followed by centrifugal washing using ethanol three times to prepare a composite. In the composite, an organic fibrous filler had an average fiber diameter of 0.07 µm, an average fiber length of 10 µm, and an aspect ratio of about 140. In the composite, the content of silica was 50 parts by weight based on 100 parts by weight of the total weight of the composite, and the content of silica was 100 parts by weight based on 100 parts by weight of the cellulose nanofibers.

### Preparation of composite solid electrolyte

### Example 1 (binder: 5 wt%, composite: 2 wt%)

94.5 parts by weight of an argyrodite-type sulfide solid electrolyte (Li₆PS₅Cl) (average particle diameter: 3 µm), 5 parts by weight of polyacrylate as a binder, 2 parts by weight of the composite of Preparation Example 1, 0.5 parts by weight of a nonionic dispersant (Hypermer KD13, manufactured by CRODA Ltd.), and 90 parts by weight of octyl acetate as a solvent were put into a container and mixed by using a paste mixer to prepare a composition for forming a composite solid electrolyte having a solid content of about 53 wt%.

The composition for forming a composite solid electrolyte was applied onto a release film using a doctor blade, and primarily dried in a convection oven at a temperature of 80 °C. for 30 minutes, vacuum-dried in a vacuum oven at 70 °C for 2 hours, and separated from the release film to form a composite solid electrolyte having a thickness of 70 µm.

### Comparative Example 1: (composite: 0 parts by weight)

A solid electrolyte was prepared in the same manner as in Example 1, except that the composite was not added in preparing the composition for forming a solid electrolyte and the composition was prepared according to the following process.

94.5 parts by weight of an argyrodite-type sulfide solid electrolyte (LiₛPS₅Cl), 5 parts by weight of polyacrylate as a binder, 0.5 parts by weight of a nonionic dispersant (Hypermer KD13, manufactured by CRODA Ltd.), and 80 parts by weight of octyl acetate as a solvent were put into a container and mixed using a paste mixer to prepare a composition for forming a solid electrolyte having a solid content of about 56 wt%.

### Example 2 (binder: 2.5 wt%, composite: 0.5 wt%)

A composite solid electrolyte was prepared in the same manner as in Example 1, except that, in preparing the composition for forming a composite solid electrolyte, the content of the solid electrolyte was changed to 97 parts by weight, the content of the binder was changed to 2.5 parts by weight, the content of the composite was changed to 0.5 parts by weight, and the thickness of the solid electrolyte was changed to 110 µm.

### Example 3 (binder: 2.5 wt%, composite: 1 wt%)

A composite solid electrolyte was prepared in the same manner as in Example 1, except that, in preparing the composition for forming a composite solid electrolyte, the content of the solid electrolyte was changed to 97 parts by weight, the content of the binder was changed to 2.5 parts by weight, the content of the composite was changed to 1 part by weight, and the thickness of the solid electrolyte was changed to 110 µm.

### Comparative Example 2: (0 parts by weight of complex)

A composite solid electrolyte was prepared in the same manner as in Example 2, except that the composite was not added in preparing the composition for forming a solid electrolyte and the composition was prepared according to the following process.

97 parts by weight of an argyrodite-type sulfide solid electrolyte (Li₆PS₅Cl), 2.5 parts by weight of polyacrylate as a binder, 0.5 parts by weight of a nonionic dispersant (Hypermer KD13, manufactured by CRODA Ltd.), and 65 parts by weight of octyl acetate as a solvent were put into a container and mixed using a paste mixer to prepare a composition for forming a solid electrolyte having a solid content of about 60 wt%.

### Example 4 (binder: 3 wt%, composite: 1 wt%)

A composite solid electrolyte was prepared in the same manner as in Example 1, except that, in preparing the composition for forming a composite solid electrolyte, the content of the solid electrolyte was changed to 96.5 parts by weight, the content of the binder was changed to 3 parts by weight, the content of the composite was changed to 1 part by weight, and the thickness of the solid electrolyte was changed to 85 µm.

### Example 5 (dry premixing, binder: 3 wt%, composite: 1 wt%)

85 parts by weight of an argyrodite-type sulfide solid electrolyte (Li₆PS₅Cl) (hereinafter, referred to as a first solid electrolyte) and 15 parts by weight of the composite of Preparation Example 1 were mixed, and RAM mixing was performed for 1 hour to prepare a first solid electrolyte-composite structure. The first solid electrolyte-composite structure has a structure in which the first solid electrolyte is introduced between cellulose fibrous filler units of the composite to prevent the aggregation of the cellulose fibrous filler.

7 parts by weight of the first solid electrolyte-composite structure, 89.5 parts by weight of an argyrodite-type sulfide solid electrolyte (Li₆PS₅Cl) (hereinafter, referred to as a second solid electrolyte), 3 parts by weight of polyacrylate as a binder, 0.5 parts by weight of a nonionic dispersant (Hypermer KD13, manufactured by CRODA Ltd.), and 70 parts by weight of octyl acetate as a solvent were put into a container and mixed to prepare a composition for forming a composite solid electrolyte. The mixing weight ratio of the first solid electrolyte and the second solid electrolyte is 7:89.5, and the content of the composite is 1 part by weight based on 100 parts by weight of the composition for forming a composite solid electrolyte.

The composition for forming a composite solid electrolyte was applied onto a release film using a doctor blade, and primarily dried in a convection oven at a temperature of 80 °C. for 30 minutes, vacuum-dried in a vacuum oven at 70 °C for 2 hours, and separated from the release film to form a composite solid electrolyte having a thickness of about 85 µm.

### Comparative Example 3 (composite: 0 wt%)

A solid electrolyte was prepared in the same manner as in Example 4, except that the composite was not added in preparing the composition for forming a composite solid electrolyte and the composition was prepared according to the following process.

96.5 parts by weight of an argyrodite-type sulfide solid electrolyte (LiₛPS₅Cl), 3 parts by weight of polyacrylate as a binder, 0.5 parts by weight of a nonionic dispersant (Hypermer KD13, manufactured by CRODA Ltd.), and 70 parts by weight of octyl acetate as a solvent were put into a container and mixed using a paste mixer to prepare a composition for forming a solid electrolyte having a solid content of about 60 wt%.

### Manufacture of cathode-solid electrolyte subassembly

### Example 6

### Cathode

LiNi_{0.8}Co_{0.15}Al_{0.05}O₂ (NCA) (D₅₀=14 µm) was prepared as a cathode active material.

Crystalline argyrodite-type solid electrolyte (Li₆PS₅Cl) powder was prepared as a solid electrolyte. Carbon nanofibers (CNFs) were prepared as a conductive agent, and polyvinylidene fluoride (PVDF) was prepared as a binder. The cathode active material, the solid electrolyte, the conductive agent, and the binder were mixed in a weight ratio of 84:14.8:0.2:1.0, and then mixed with octylacetate as a solvent to prepare a slurry, and then the slurry was applied onto a cathode current collector made of 18 µm-thick carbon-coated aluminum foil to prepare a cathode. The cathode active material layer had a thickness of about 100 µm (cathode 4 milliampere-hours per square centimeter (mAh/cm²) L/L).

### Composite solid electrolyte (composite: 2 wt%)

94.5 parts by weight of an argyrodite-type sulfide solid electrolyte (LiₛPS₅Cl), 5 parts by weight of polyacrylate as a binder, 2 parts by weight of the composite of Preparation Example 1, 0.5 parts by weight of a nonionic dispersant (Hypermer KD13, manufactured by CRODA Ltd.), and 90 parts by weight of octyl acetate as a solvent were put into a container and mixed using a paste mixer to prepare a composition for forming a composite solid electrolyte having a solid content of about 53 wt%.

The composition for forming a composite solid electrolyte was applied onto a release film using a doctor blade, and primarily dried in a convection oven at a temperature of 80 °C. for 30 minutes, vacuum-dried in a vacuum oven at 70 °C for 2 hours, and separated from the release film to form a first solid electrolyte layer (1SE) having a thickness of about 50 µm.

The first solid electrolyte layer (1SE) was placed on the cathode to prepare a laminate. The prepared laminate was subjected to roll pressing at a temperature of 90 °C and a pressure of 3.5 tons per square centimeter (ton/cm²) to manufacture a cathode-first solid electrolyte subassembly (cathode/1SE structure) having a thickness of about 115 µm. The 1SE had a thickness of about 30 µm after pressing.

### Example 7

### Cathode

LiNi_{0.8}Co_{0.15}Al_{0.05}O₂ (NCA) (D₅₀=14 µm) was prepared as a cathode active material.

Crystalline argyrodite-type solid electrolyte (Li₆PS₅Cl) powder was prepared as a solid electrolyte. Carbon nanofibers (CNFs) were prepared as a conductive agent, and polyvinylidene fluoride (PVDF) was prepared as a binder. The cathode active material, the solid electrolyte, the conductive agent, and the binder were mixed in a weight ratio of 84:14.8:0.2:1.0, and then mixed with octylacetate as a solvent to prepare a slurry, and then the slurry was applied onto a cathode current collector made of 18 µm-thick carbon-coated aluminum foil to prepare a cathode. The cathode active material layer had a thickness of about 100 µm (cathode 4 mAh/cm² L/L).

### Composite solid electrolyte (composite: 2 wt%)

94.5 parts by weight of an argyrodite-type sulfide solid electrolyte (LiₛPS₅Cl), 5 parts by weight of polyacrylate as a binder, 2 parts by weight of the composite of Preparation Example 1, 0.5 parts by weight of a nonionic dispersant (Hypermer KD13, manufactured by CRODA Ltd.), and 90 parts by weight of octyl acetate as a solvent were put into a container and mixed using a paste mixer to prepare a composition for forming a composite solid electrolyte having a solid content of about 53 wt%.

The composition for forming a composite solid electrolyte was applied onto a release film using a doctor blade, and primarily dried in a convection oven at a temperature of 80 °C. for 30 minutes, vacuum-dried in a vacuum oven at 70 °C for 2 hours, and separated from the release film to form a first solid electrolyte layer (1SE) having a thickness of about 80 µm.

The first solid electrolyte layer (1SE) was placed on the cathode to prepare a laminate. The prepared laminate was subjected to roll pressing at a temperature of 90 °C and a pressure of 3.5 ton/cm2 to manufacture a cathode-first solid electrolyte subassembly (cathode/1SE structure) having a thickness of about 135 µm. The 1SE had a thickness of about 50 µm after pressing.

### Comparative Example 4

A solid electrolyte was prepared in the same manner as in Example 6, except that the composite was not added in preparing the composition for forming a composite solid electrolyte and the composition was prepared according to the following process. Then, a cathode-solid electrolyte subassembly (cathode/1SE structure) was manufactured using the solid electrolyte.

94.5 parts by weight of an argyrodite-type sulfide solid electrolyte (LiₛPS₅Cl), 5 parts by weight of polyacrylate as a binder, 0.5 parts by weight of a nonionic dispersant (Hypermer KD13, manufactured by CRODA Ltd), and 90 parts by weight of octyl acetate as a solvent were put into a container and mixed using a paste mixer to prepare a composition for forming a solid electrolyte having a solid content of about 53 wt%.

### Comparative Example 5

A solid electrolyte was prepared in the same manner as in Example 7, except that the composite was not added in preparing the composition for forming a composite solid electrolyte and the composition was prepared according to the following process. Then, a cathode-solid electrolyte subassembly (cathode/1SE structure) was manufactured using the solid electrolyte.

94.5 parts by weight of an argyrodite-type sulfide solid electrolyte (LiₛPS₅Cl), 5 parts by weight of polyacrylate as a binder, 0.5 parts by weight of a nonionic dispersant (Hypermer KD13, manufactured by CRODA Ltd), and 90 parts by weight of octyl acetate as a solvent were put into a container and mixed using a paste mixer to prepare a composition for forming a solid electrolyte having a solid content of about 53 wt%.

### Manufacture of anode-solid electrolyte subassembly (anode/1SE structure)

### Example 7

### Anode

A carbon-silver (AgC) anode prepared according to the following process was used as an anode.

The carbon-silver (AgC) anode was prepared by forming an anode active material layer containing a composite (AgC) containing a carbon-containing active material and silver (Ag) and having a thickness of 10 µm on a stainless steel substrate having a thickness of 10 µm.

In order to form the anode active material layer, carbon black (CB) particles having an average particle diameter of about 38 nm, as a carbon-containing material, were mixed with silver (Ag) particles having an average particle diameter of about 60 nm at a weight ratio of 3:1 to prepare mixed powder. 4 g of the mixed powder was mixed with 6 g of a NMP solution including 5 wt% of a PVDF binder, and NMP was added little by little while stirring to prepare an anode slurry. The anode slurry was applied onto a stainless steel substrate using a blade coater and dried under air conditions at 80 °C for 20 minutes. Then, the applied slurry was dried in vacuum at 100 °C for 12 hours to prepare an anode.

### Composite solid electrolyte (composite: 2 wt%)

94.5 parts by weight of an argyrodite-type sulfide solid electrolyte (Li₆PS₅Cl), 5 parts by weight of polyacrylate as a binder, 2 parts by weight of the composite of Preparation Example 1, 0.5 parts by weight of a nonionic dispersant (Hypermer KD13, manufactured by CRODA Ltd), and 90 parts by weight of octyl acetate as a solvent were put into a container and mixed using a paste mixer to prepare a composition for forming a composite solid electrolyte having a solid content of about 53 wt%.

The composition for forming a composite solid electrolyte was applied onto a release film using a doctor blade, and primarily dried in a convection oven at a temperature of 80 °C. for 30 minutes, vacuum-dried in a vacuum oven at 70 °C for 2 hours, and separated from the release film to form a second solid electrolyte layer (2SE) having a thickness of about 80 µm.

The second solid electrolyte layer (2SE) was placed on the anode to prepare a laminate. The prepared laminate was subjected to roll pressing at a temperature of 90 °C and a pressure of 3.5 ton/cm² to manufacture an anode-second solid electrolyte subassembly (anode/2SE structure).

### Manufacture of solid secondary battery

Solid secondary batteries in the following manufacturing examples and comparative manufacturing examples are all-solid-state secondary batteries.

### Manufacturing Example 1 (single solid electrolyte layer)

### Cathode

LiNi_{0.8}CO_{0.15}Al_{0.05}O₂ (NCA) (D₅₀=14 µm) was prepared as a cathode active material.

Crystalline argyrodite-type solid electrolyte (Li₆PS₅Cl) powder was prepared as a solid electrolyte. Carbon nanofibers (CNFs) were prepared as a conductive agent, and polyacrylate was prepared as a binder. The cathode active material, the solid electrolyte, the conductive agent, and the binder were mixed in a weight ratio of 84:14.8:0.2:1.0, and then mixed with octyl acetate as a solvent to prepare a slurry, and then the slurry was applied onto a cathode current collector made of 18 µm-thick carbon-coated aluminum foil to prepare a cathode. The cathode active material layer had a thickness of about 100 µm (cathode 4 mAh/cm² L/L).

### Anode

A carbon-silver (AgC) anode prepared according to the following process was used as an anode.

The AgC anode was prepared by forming an anode active material layer containing a composite (AgC) containing a carbon-containing active material and silver (Ag) and having a thickness of 10 µm on a stainless steel substrate having a thickness of 10 µm.

In order to form the anode active material layer, carbon black (CB) particles having an average particle diameter of about 38 nm, as a carbon-containing material, were mixed with Ag particles having an average particle diameter of about 60 nm at a weight ratio of 3:1 to prepare mixed powder. 4 g of the mixed powder was mixed with 6 g of a N-Methyl-2-pyrrolidone (NMP) solution including 5 wt% of a polyvinylidene fluoride (PVDF) binder, and NMP was added little by little while stirring to prepare an anode slurry. The anode slurry was applied onto a stainless steel substrate using a blade coater and dried under air conditions at 80 °C for 20 minutes. Then, the applied slurry was dried in vacuum at 100 °C for 12 hours to prepare an anode.

### Composite solid electrolyte

The composite solid electrolyte prepared in Example 1, and the anode were sequentially placed on the cathode to prepare a laminate. The prepared laminate was subjected to warm isotactic pressing (WIP) at 85°C and 500 MPa to complete a solid secondary battery.

### Comparative Manufacturing Example 1

A solid secondary battery was manufactured in the same manner as in Manufacturing Example 1, except that the solid electrolyte of Comparative Example 1 was used instead of the composite solid electrolyte of Example 1.

### Manufacturing Example 2 (2-layered solid electrolyte layer: 1SE + 2SE) (Bilayer SE)

The cathode/1SE structure in Example 7, the solid electrolyte (2SE) (thickness: about 80 µm before pressing) manufactured in Comparative Example 1, and the anode were sequentially placed to prepare a laminate.

The prepared laminate was subjected to roll pressing at a temperature of 90 °C and a pressure of 3.5 ton/cm² to manufacture a cathode/1SE/2SE/anode structure, thereby completing a solid secondary battery.

### Comparative Manufacturing Example 2

A solid secondary battery was completed in the same manner as in Manufacturing Example 2, except that the cathode/1SE structure manufactured according to Comparative Example 5 was used instead of the cathode/1SE structure manufactured according to Example 7.

### Evaluation Example 1: Scanning Electron Microscope

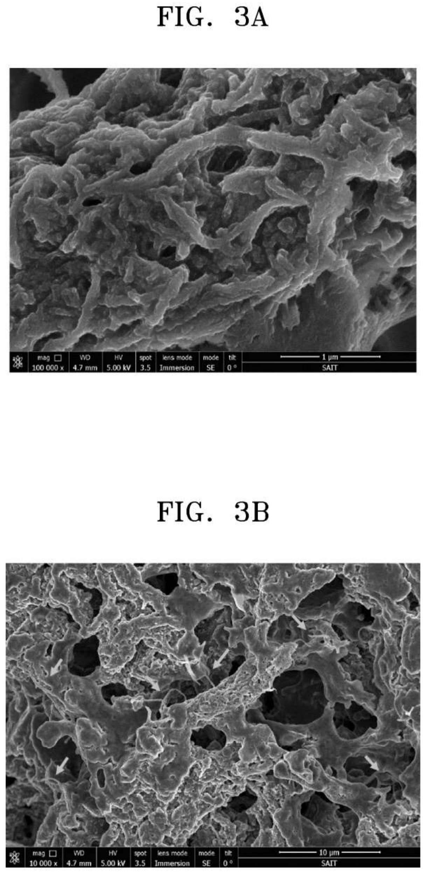

SEM analysis was performed on the composite of Preparation Example 1 and the solid electrolyte-composite structure (cluster) obtained by dry premixing in Example 5. The SEM analysis results are shown in FIG. 3A and 3B. FIG. 3A is an SEM image of the nanocellulose composite of Preparation Example 1, as a starting material, and FIG. 3B is an SEM image of the solid electrolyte-composite structure (cluster) obtained by dry premixing in Example 5.

As shown in FIG. 3A, the composite of Preparation Example 1 had a large number of pores, and a portion thereof had an aggregate form.

However, as shown in FIG. 3B, the solid electrolyte-composite structure of Example 5 had a structure in which the cellulose fibrous filler units of the composite were arranged with almost no aggregation and the solid electrolyte was introduced between the cellulose fibrous filler units by dry mixing the solid electrolyte and the nanocellulose composite. In FIG. 3B, the arrows indicate that the fibrous units of the composite are well dispersed and separated from each other without aggregation, and that a solid electrolyte is interposed among the pores of the composite to prevent the aggregation of the composite. In this way, when making a solid electrolyte-composite structure through a dry-premixing process and using this solid electrolyte-composite structure in the preparation of a solid electrolyte, the interaction between the solid electrolyte and the compose can be improved, thereby increasing a strain improvement effect.

### Evaluation Example 2: Analysis of bending strength and strain of solid electrolyte according to addition of composite

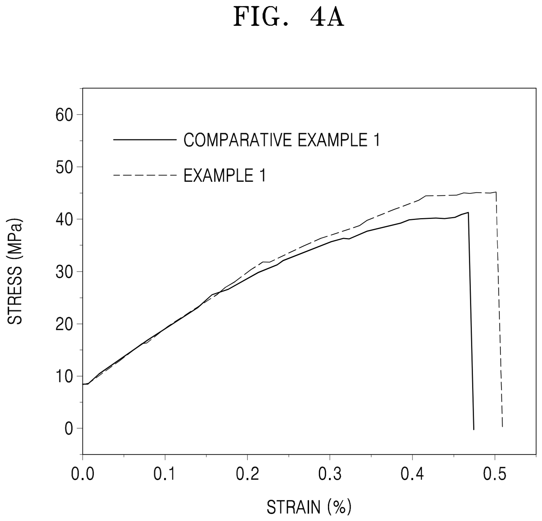

The strain of each of the composite solid electrolyte of Example 1 and the solid electrolyte of Comparative Example 1 was evaluated using the ratio of a bent length to a span width (14 millimeters (mm)), and the evaluation results thereof are shown in Table 1. Here, each of the composite solid electrolyte and the solid electrolyte has a width of 12 mm and a length of 30 mm. In addition, FIG. 4A shows the change in stress to strain from preload in the composite solid electrolyte of Example 1 and the solid electrolyte of Comparative Example 1.

The bending strength was measured using a three-point bending test, and the evaluation thereof was as follows. The midpoint of the length of the solid electrolyte sample was positioned at the exact center of the span of a bending strength analyzer, and a jig equipped with a load cell having a maximum load of 1 kilonewton (kN) was pressed vertically at a speed of 1 millimeter per minute (mm/min) to measure the maximum strength when the solid electrolyte was bent. The results thereof are shown in Table 1 below.

**Table 1**

| Class. | SE membrane composition | Thickness of solid electrolyte (µm) | Bending strength (MPa) | Strain (%) | Strain (mm) |
|---|---|---|---|---|---|
| Example 1 | Binder 5 parts by weight Composite 2 parts by weight | 70 | 45.2 | 0.47 | 2.36 |
| Comparative Example 1 | Binder 5 parts by weight | 70 | 40.4 | 0.44 | 2.16 |

Referring to Table 1, it was confirmed that the composite solid electrolyte of Example 1 contained a composite and thus had an increased strain as compared with the solid electrolyte of Comparative Example 1, thereby improving flexibility and enhancing bending strength. These results were obtained because the strain and bending strength increased simultaneously due to the synergistic effect of the interaction between a composite-binder and a solid electrolyte-composite. From this, the application effect of the composite in the preparation of solid electrolytes can be confirmed.

In addition, referring to FIG. 4A, it was confirmed that the composite solid electrolyte of Example 1 containing the composite had an effect of improving flexibility as compared with the solid electrolyte of Comparative Example 1 not containing the composite.

Evaluation Example 3: Analysis of bending strength and strain of solid electrolyte according to content of composite

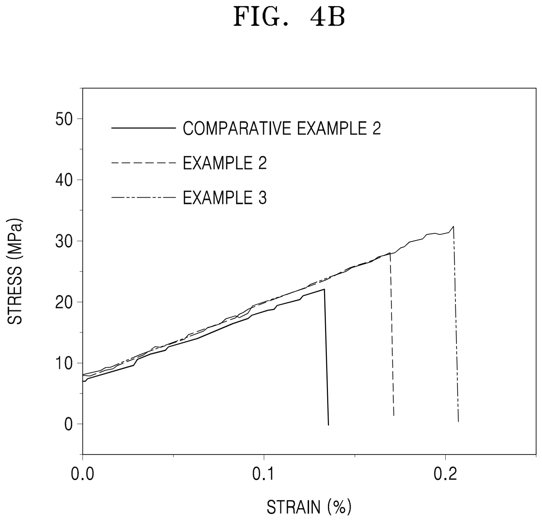

The bending strength and strain of the composite solid electrolytes of Examples 2 and 3 and the solid electrolyte of Comparative Example 2 were measured, and the results thereof are shown in Table 2 below and FIG. 4B. The bending strength and strain were evaluated in the same manner as in Evaluation Example 2.

**Table 2**

| Class. | Content of binder (wt%) | Content of composite (mCNT) (wt%) | Thickness of solid electrolyte (µm) | Bending strength (MPa) | Strain (%) |
|---|---|---|---|---|---|
| Example 2 | 2.5 | 0.5 | 110 | 27.4 | 0.16 |
| Example 3 | 2.5 | 1 | 110 | 30.9 | 0.22 |
| Comparative Example 2 | 2.5 | - | 110 | 22.5 | 0.14 |

Referring to Table 2 and FIG. 4B, the bending strength and strain of composite solid electrolytes of Examples 2 and 3 containing a composite were improved as compared with the bending strength and strain of the solid electrolyte of Comparative Example 2. Among them, the composite solid electrolyte of Example 3 contains a larger amount of composite as compared with the composite solid electrolyte of Example 2, and as a result, exhibits further improved bending strength and strain.

### Evaluation Example 4: Improvement of composition for forming composite solid electrolyte according to dispersion method

The bending strength and strain of the composite solid electrolytes of Examples 4 and 5 and the solid electrolyte of Comparative Example 3 were measured, and the results thereof are shown in Table 3 below. The bending strength and strain were evaluated in the same manner as in Evaluation Example 2.

**Table 3**

| Class. | Content of binder (wt%) | Content of composite (mCNT) (wt%) | Thickness of solid electrolyte (µm) | Bending strength (MPa) | Strain (%) |
|---|---|---|---|---|---|
| Example 4 | 3 | 1 | 85 | 45.6 | 0.26 |
| Example 5 | | 1 | 85 | 46.2 | 0.34 |
| Comparative Example 3 | | - | 85 | 43.1 | 0.28 |

Referring to Table 3, the bending strength and strain of composite solid electrolytes of Examples 4 and 5 containing a composite were improved as compared with the bending strength and strain of the solid electrolyte of Comparative Example 3.

In particular, the composite solid electrolyte of Example 5 was prepared by forming a cluster of the solid electrolyte/composite by dry premixing of the solid electrolyte and the composite, and a slurry was prepared using this cluster. The cluster of the solid electrolyte/composite was formed into a structure due to differences in ductility and shear force, which exhibits improved dispersion and enhanced solid electrolyte-composite interaction, resulting in significantly improved strain.

Evaluation Example 5: Analysis of bending strength of cathode-solid electrolyte subassembly

The bending strength and strain of the cathode-solid electrolyte subassemblies of Examples 6 and 7 and Comparative Examples 4 and 5 were measured, and the results thereof are shown in Table 4 below. The bending strength and strain were evaluated in the same manner as in Evaluation Example 2.

**Table 4**

| Class. | Content of composite (mCNT) (wt%) | Thickness of the cathode-solid electrolyte subassembly (µm) | Thickness of solid electrolyte (µm) | Bending strength (MPa) | Strain (%) |
|---|---|---|---|---|---|
| Example 6 | 2 | 115 | 30 | 37.4 | 0.16 |
| Comparative Example 4 | - | | | 35.2 | 0.17 |
| Example 7 | 2 | 135 | 50 | 46.2 | 0.28 |
| Comparative Example 5 | - | | | 43.1 | 0.27 |

Referring to Table 4, the bending strength of the cathode-solid electrolyte subassembly of Example 6 was improved as compared with that of Comparative Example 4 which did not contain a composite after bonding the cathode and the solid electrolyte by a roll pressing process.

The cathode-solid electrolyte subassembly of Example 7 contains a solid electrolyte having an increased thickness as compared with the composite solid electrolyte of Example 6, and as shown in Table 4, the bending strength of the solid electrolyte of Example 7 is improved as compared with that of the solid electrolyte of Comparative Example 5. Therefore, the cathode-solid electrolyte subassemblies of Examples 6 and 7 can be applied using a roll pressing process, and the strength thereof can be improved, thereby making workability easier and reducing a defect rate when manufacturing a battery.

### Evaluation Example 6: Initial efficiency and rate characteristics evaluation (I)

The solid secondary batteries manufactured according to Manufacture Example 1 and Comparative Manufacture Example 1 were put into a chamber at 45 °C.

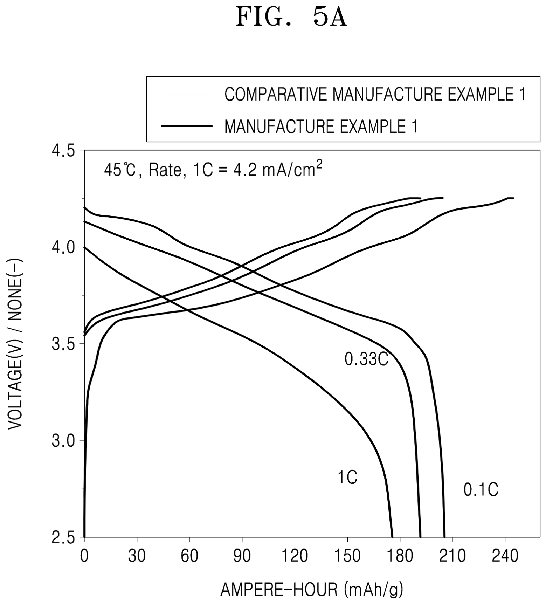

Each of the solid secondary batteries was charged at a constant current of 0.1 coulomb (C) rate until the voltage reached 4.25 V (vs. Li), and then cut-off at a current of 0.05 C rate while maintaining a constant voltage of 4.25 V. Each of the solid secondary batteries was discharged once at a constant current of 0.1 C, 0.33 C, or 1.0 C, discharge capacity according to C-rate thereof was measured, and the results thereof are shown in Table 5 and FIG. 5A. Voltage changes according to capacity per weight in the solid secondary batteries of Manufacture Example 1 and Comparative Manufacture Example 1 are shown in FIG. 5A.

**Table 5**

| Class. | Content of composite (parts by weight) | Discharge capacity at 0.1 C (mAh/g) | Discharge capacity at 0.33 C (mAh/g) | Discharge capacity at 1.0 C (mAh/g) | Discharge capacity ratio (%) at 1.0 C/0.1 C | Initial efficiency (%) |
|---|---|---|---|---|---|---|
| Manufacture Example 1 | 2 | 207.4 | 193.8 | 178.4 | 86 | 84 |
| Comparative Manufacture Example 1 | 2 | 204.9 | 191.5 | 176.6 | 86 | 84 |

Referring to Table 5 and FIG. 5A, in the solid secondary battery of Manufacture Example 1, it was found that when a composite solid electrolyte containing a composite as a reinforcing filler was used and the battery was manufactured using a WIP pressurization method, the stability of an electrode plate structure was secured without deterioration of cell characteristics. The solid secondary battery of Manufacture Example 1 exhibited initial efficiency characteristics and rate characteristics equivalent to those of the solid secondary battery of Comparative Manufacture Example 1.

In addition, the solid secondary battery of Manufacture Example 1 has improved life characteristics, as can be seen in the evaluation examples below.

### Evaluation Example 7: Initial efficiency and rate characteristics evaluation (II)

The solid secondary batteries manufactured according to Manufacture Example 2 and Comparative Manufacture Example 2 were put into a chamber at 45 °C.

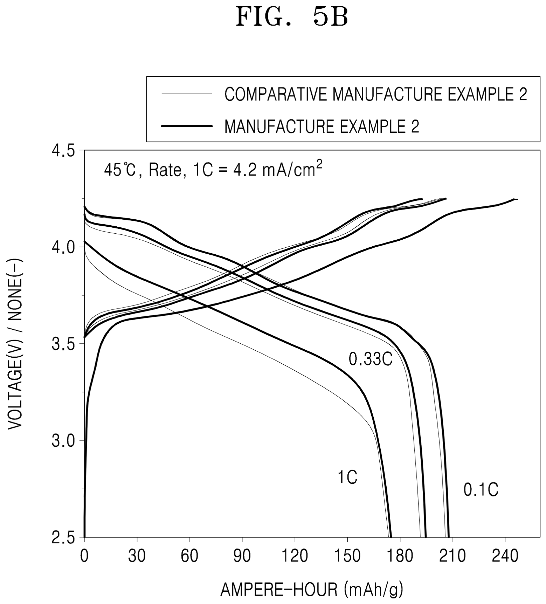

Each of the solid secondary batteries was charged at a constant current of 0.1 C rate until the voltage reached 4.25 V (vs. Li), and then cut-off at a current of 0.05 C rate while maintaining a constant voltage of 4.25 V. Each of the solid secondary batteries was discharged once at a constant current of 0.1 C, 0.33 C, or 1.0 C, discharge capacity according to C-rate thereof was measured, and the results thereof are shown in Table 6 and FIG. 5B. Voltage changes according to capacity per weight in the solid secondary batteries of Manufacture Example 2 and Comparative Manufacture Example 2 are shown in FIG. 5B.

**Table 6**

| Class. | Content of composite (parts by weight) | Discharge capacity at 0.1 C (mAh/g) | Discharge capacity at 0.33 C (mAh/g) | Discharge capacity at 1.0 C (mAh/g) | Discharge capacity ratio (%) at 1.0 C/0.1 C | Initial efficiency (%) |
|---|---|---|---|---|---|---|
| Manufacture Example 2 | 2 | 207.8 | 194.9 | 174.4 | 84 | 84 |
| Comparative Manufacture Example 2 | 2 | 205.8 | 191.5 | 173.3 | 83 | 84 |

Referring to Table 6 and FIG. 5B, in the solid secondary battery of Manufacture Example 2, it was found that when a composite solid electrolyte containing a composite as a reinforcing filler was used and the battery was manufactured using a WIP pressurization method, the stability of an electrode plate structure was secured without deterioration of cell characteristics. Since the cathode-solid electrolyte subassembly has excellent strength, when manufacturing a battery, not only a defect rate is reduced, but also workability is excellent.

The solid secondary battery of Manufacture Example 2 exhibited initial efficiency characteristics and rate characteristics equivalent to those of the solid secondary battery of Comparative Manufacture Example 2.

In addition, the solid secondary battery of Manufacture Example 2 has improved life characteristics, as can be seen in the evaluation examples below.

### Evaluation Example 8: Charge/discharge characteristics (I)

The charge/discharge characteristics of the solid secondary batteries of Manufacture Example 1 and Comparative Manufacture Example 1 were evaluated, and in particular, whether the solid secondary batteries of Manufacture Example 1 and Comparative Manufacture Example 1 operate at a high current density (0.33 C) was investigated. Whether or not each solid secondary battery operates was determined by the presence or absence of a micro-short circuit, through a charging and discharging method at a constant current, which will be described below.

### Each solid secondary battery was put into a chamber at 45 °C.

Each solid secondary battery was charged at a constant current of 0.1 C rate until the voltage reached 4.25 V (vs. Li). Then, each solid secondary battery was discharged until the voltage reached 4.25 V (vs. Li) during discharging. (1st cycle).

The solid secondary battery that had undergone a 0.1 C rate cycle was charged at a constant current of 0.33 C rate at 45 °C until the voltage reached 4.25 V (vs. Li). Then, the solid secondary battery was cut-off at a current of 0.05 C rate while maintaining a constant voltage of 4.25 V. Further, the solid secondary battery was discharged at a constant current of 0.33 C rate until the voltage reached 2.5 V (vs. Li).

The charge-discharge cycle was repeated a total of 200 times (2nd to 200th cycles).

The results of short-circuiting of the solid secondary batteries for charge/discharge at a constant current of 0.33 C rate were investigated.

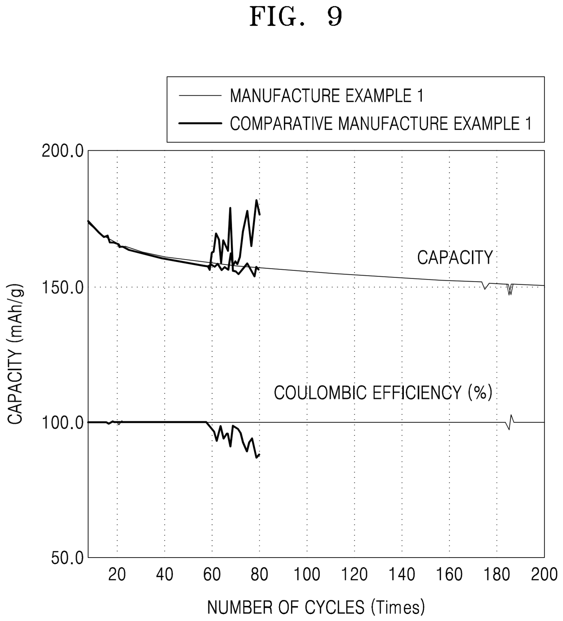

The capacity change and Coulombic efficiency according to the number of cycles of each solid secondary battery after the charge/discharge process were evaluated, and some of the evaluation results are shown in Table 7 and FIG. 9, respectively.

In Table 7 below, it was considered that as the number of cycles increases, each solid secondary battery has better life characteristics.

**Table 7**

| Class. | Charge-discharge lifespan at 0.33 C |
|---|---|
| Manufacture Example 1 | 200 cycles |
| Comparative Manufacture Example 1 | 59 cycles |

As shown in Table 7, it was confirmed that the solid secondary battery of Manufacture Example 1, unlike the solid secondary battery of Comparative Manufacture Example 1, had a solid electrolyte membrane of improved toughness, and thus the lifespan of the solid secondary battery was improved even under a charging condition of 0.33 C.

In contrast, in Comparative Production Example 1, it can be confirmed that a micro-short circuit occurs at 60 cycles and Coulombic efficiency begins to decrease.

### Evaluation Example 9: Charge/discharge characteristics (II)

The charge/discharge characteristics of the solid secondary batteries of Manufacture Example 2 and Comparative Manufacture Example 2 were evaluated. The charge/discharge characteristics of the solid secondary batteries were evaluated when the solid secondary batteries were charged at a high current density (0.33 C), and whether or not each solid secondary battery operates was determined by the presence or absence of a micro-short circuit, through a charging and discharging method at a constant current, which will be described below.

Each solid secondary battery was put into a chamber at 45 °C. Each solid secondary battery was charged at a constant current of 0.1 C rate until the voltage reached 4.25 V (vs. Li). Then, each solid secondary battery was discharged until the voltage reached 4.25 V (vs. Li) during discharging. (1st cycle).

The solid secondary battery that had undergone a 0.1 C rate cycle was charged at a constant current of 0.33 C rate at 45 °C until the voltage reached 4.25 V (vs. Li). Then, the solid secondary battery was cut-off at a current of 0.05 C rate while maintaining a constant voltage of 4.25 V.

Further, the solid secondary battery was discharged at a constant current of 0.33 C rate until the voltage reached 2.5 V (vs. Li).

The charge-discharge cycle was repeated a total of 200 times (2nd to 200th cycles).

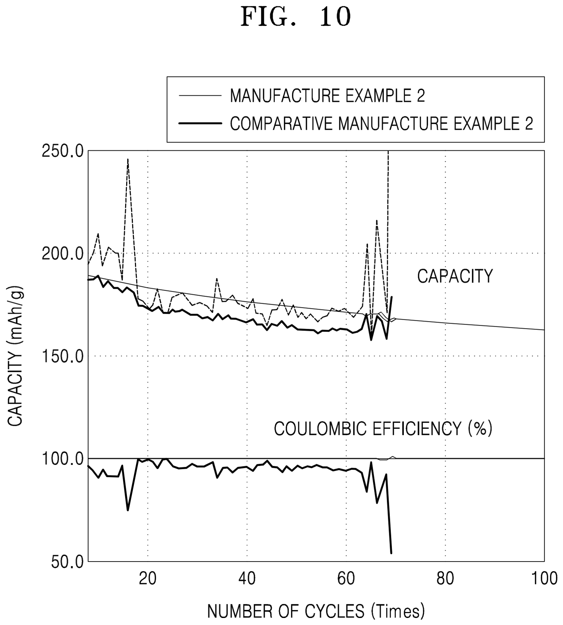

The results of short-circuiting of the solid secondary batteries for charge/discharge at a constant current of 0.33 C rate were shown in Table 8 below and FIG. 10.

**Table 8**

| Class. | Charge-discharge lifespan at 0.33 C |
|---|---|
| Manufacture Example 2 | 100 cycles |
| Comparative Manufacture Example 2 | Initial fine short fault occurred, hard-short occurred 69 times |

As shown in Table 8, it was confirmed that the solid secondary battery of Manufacture Example 2, unlike the solid secondary battery of Comparative Manufacture Example 2, had a solid electrolyte membrane of improved toughness, and thus the lifespan of the solid secondary battery was improved even under a charging condition of 0.33 C. The solid secondary battery of Comparative Manufacture Example 2 showed low charge/discharge efficiency along with micro-short circuit behavior from the beginning of lifespan evaluation due to micro-cracks occurring during a cell production process, and a hard short phenomenon was confirmed at 69 cycles.

A composite solid electrolyte according to an embodiment has improved toughness by ensuring structural stability. When using such a composite solid electrolyte, a solid secondary battery with improved stability and cycle characteristics can be manufactured by suppressing micro-cracks and fractures during a continuous pressurization process and a thin film formation process.

Although an embodiment has been described above with reference to drawings and examples, this is merely exemplary, and those skilled in the art will understand that various modifications and equivalent other implementations are possible. Accordingly, the scope of protection of the present application should be defined by the appended claims.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. A composite solid electrolyte comprising:
a sulfide-containing solid electrolyte;
a binder; and
a filler composite, wherein the filler composite comprises:
an organic fibrous filler; and
a metal oxide located on a surface of the organic fibrous filler.

2. The composite solid electrolyte of claim 1, wherein the organic fibrous filler comprises a polymer fiber having a linear structure.

3. The composite solid electrolyte of claim 1 or 2, wherein the organic fibrous filler has an average diameter of 0.001 micrometers to 10 micrometers,
an average length of 0.1 micrometers to 500 micrometers, and
an aspect ratio (an average diameter / an average length) of 15 to 100,000,and optionally wherein the organic fibrous filler has an average diameter of 0.005 micrometers to 1 micrometers,
an average length of 0.1 micrometers to 200 micrometers, and
an aspect ratio (an average diameter / an average length) of 50 to 5,000.

4. The composite solid electrolyte of any preceding claim, wherein the metal oxide is silica, titanium dioxide, zinc oxide, cobalt oxide, or a combination thereof and/or wherein the organic fibrous filler comprises a cellulose fiber, an acrylic fiber, an amide fiber, an olefin fiber, an ester fiber, a urethane fiber, a styrene fiber, an imide fiber, or a combination thereof.

5. The composite solid electrolyte of any preceding claim, wherein a content of the filler composite is 0.1 parts by weight to 10 parts by weight based on 100 parts by weight of a total weight of the composite solid electrolyte.

6. The composite solid electrolyte of any preceding claim, wherein a content of the metal oxide in the filler composite is 10 parts by weight to 100 parts by weight based on 100 parts by weight of the organic fiber filler.

7. The composite solid electrolyte of any preceding claim, wherein the sulfide-containing solid electrolyte has a crystalline structure, and the sulfide-containing solid electrolyte includes an argyrodite-type compound.

8. The composite solid electrolyte of any preceding claim, wherein the sulfide-containing solid electrolyte is at least one of Li₂S-P₂S₅, Li₂S-P₂S₅-LiX wherein X is a halogen, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ wherein m, n are positive numbers, and Z is one of Ge, Zn, Ga, or a combination thereof, Li₂S-GeS₂, Li₂S-SiS₂-Li₃PO₄, Li₂S-SiS₂-LiₚMO_{q} wherein p and q are positive numbers, and M is one of P, Si, Ge, B, Al, Ga, In, or a combination thereof, Li₇₋ₓPS₆₋ₓClₓ wherein0≤x≤), Li₇₋ₓPS₆₋ₓBrₓ wherein 0≤x≤2, or Li₇₋ₓPS₆₋ₓIₓ wherein 0≤x≤2.

9. The composite solid electrolyte of any preceding claim, wherein the composite comprises a cellulose nanofiber,
and further wherein silica particles attached to a surface of the cellulose nanofiber, the cellulose nanofiber is a nanocellulose composite having at least a partially exposed surface, and
the nanocellulose composite comprises a plurality of pores formed between the cellulose nanofibers.

10. A solid secondary battery comprising:
a cathode;
an anode; and
a solid electrolyte layer between the cathode and the anode,
wherein the solid electrolyte layer comprises a composite solid electrolyte according to any preceding claim.

11. The solid secondary battery of claim 10, wherein the solid electrolyte layer comprises a first solid electrolyte layer and a second solid electrolyte layer,
the first solid electrolyte layer is in contact with the cathode,
the second solid electrolyte layer is in contact with the anode,
at least one of the first solid electrolyte layer or the second solid electrolyte layer comprises the composite solid electrolyte,
the composite solid electrolyte comprises the sulfide-containing solid electrolyte, the binder, and the composite, and
the composite comprises the organic fibrous filler and the metal oxide located on the surface of the organic fibrous filler.

12. The solid secondary battery of claim 10 or 11, wherein the anode comprises an anode current collector,
a first anode active material layer is located between the anode current collector and the solid electrolyte layer,
the first anode active material layer comprises an anode active material and a binder,
the anode active material comprises at least one of a carbon-containing anode active material or a metal or metalloid anode active material, and
the carbon-containing anode active material comprises amorphous carbon, crystalline carbon, porous carbon, or a combination thereof, and optionally further comprising:
a second anode active material layer located between the anode current collector and the first anode material layer after the solid secondary battery is charged,
wherein the second anode active material layer is a metal layer, and the metal layer comprises lithium or a lithium alloy.

13. A method of preparing a composite solid electrolyte layer, the method comprising:
preparing a composition for forming a composite solid electrolyte, the composition comprising a sulfide-containing solid electrolyte, a binder, a filler composite, and a solvent;
forming the composition to provide a solvent-containing composite solid electrolyte layer; and
removing the solvent to provide the composite solid electrolyte layer
wherein the composite solid electrolyte layer comprises the sulfide-containing solid electrolyte, the binder, and the filler composite, and
the filler composite comprises an organic fibrous filler and a metal oxide located on a surface of the organic fibrous filler.

14. The method of claim 13, wherein the sulfide-containing solid electrolyte comprises a first sulfide-containing solid electrolyte and a second sulfide-containing solid electrolyte, and
the preparing of the composition for forming the composite solid electrolyte layer comprises:
pre-mixing the first sulfide-containing solid electrolyte and the filler composite to prepare a first sulfide-containing solid electrolyte-composite composition; and
adding the second sulfide-containing solid electrolyte, the binder, and the solvent to the first sulfide-containing solid electrolyte-composite composition and mixing them,
wherein the first sulfide-containing solid electrolyte and the second sulfide-containing solid electrolyte are the same as or different from each other.

15. The method of claim 14, wherein, in the preparing of the first sulfide-containing solid electrolyte-composite composition, a content of the first sulfide-containing solid electrolyte is 65 parts by weight to 90 parts by weight based on 100 parts by weight of a total weight of the first sulfide-containing solid electrolyte and the composite.
